(19)

Europäisches
Patentamt
European
Patent Office
Office européen
des brevets

(11)  **EP 4 572 219 A1**

(12)  **EUROPEAN PATENT APPLICATION**
published in accordance with Art. 153(4) EPC

(43) Date of publication:
**18.06.2025 Bulletin 2025/25**

(21) Application number: **23852842.6**

(22) Date of filing: **01.08.2023**

(51) International Patent Classification (IPC):
**H04L 5/14** (2006.01)      **H04L 5/00** (2006.01)
**H04W 88/04** (2009.01)      **H04W 4/40** (2018.01)
**H04W 72/23** (2023.01)

(52) Cooperative Patent Classification (CPC):
**H04L 5/00; H04L 5/14; H04W 4/40; H04W 72/23;
H04W 88/04**

(86) International application number:
**PCT/KR2023/011195**

(87) International publication number:
**WO 2024/034961 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.08.2022 KR 20220098883**

(71) Applicant: **LG Electronics Inc.**
**Yeongdeungpo-gu**
**Seoul 07336 (KR)**

(72) Inventors:
• **SHIM, Jaenam**
  **Seoul 06772 (KR)**
• **YOU, Hyangsun**
  **Seoul 06772 (KR)**
• **KO, Hyunsoo**
  **Seoul 06772 (KR)**

(74) Representative: **Plasseraud IP**
**104 Rue de Richelieu**
**CS92104**
**75080 Paris Cedex 02 (FR)**

(54) **METHOD BY WHICH DEVICE PERFORMS COMMUNICATION IN WIRELESS COMMUNICATION SYSTEM, AND DEVICE THEREFOR**

(57)  Disclosed are a method by which a device having a forwarding link for forwarding signals received from a control link and a terminal communicates with a base station in a wireless communication system, and a device therefor, according to various embodiments. Disclosed are the method and the device therefor, the method comprising the steps of: receiving a configuration of a first time resource in which a forwarding operation for the forwarding link is performed through the control link; receiving resource allocation information about a second time resource in which transmission of an uplink signal for the control link is performed; and determining whether the transmission of the uplink signal is performed with priority over a forwarding operation in the second time resource, which overlaps with the first time resource on the basis of the type of uplink signal or payload.

**FIG. 10**

```
┌────────────────────────────────────────────┐
│ Configure first time resource on which forwarding │── S101
│   operation on forwarding link is performed   │
└────────────────────────────────────────────┘
                      │
                      ▼
┌────────────────────────────────────────────┐
│ Receive scheduling information or resource allocation │── S103
│ information about UL signal to be transmitted on C-link │
└────────────────────────────────────────────┘
                      │
                      ▼
┌────────────────────────────────────────────┐
│ Determine whether to perform Tx of UL signal on time │── S105
│ resource overlapping first time resource based on type │
│           or payload of UL signal           │
└────────────────────────────────────────────┘
```

EP 4 572 219 A1

**Description**

**TECHNICAL FIELD**

A method for a device to perform communication in a wireless communication system and a device therefor.

**BACKGROUND ART**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

**DISCLOSURE**

**Technical Problem**

Objects to be achieved are to provide a method and device for efficiently performing time division multiplexing (TDM) between a forwarding operation on a forwarding link and a transmission operation of an uplink signal on a control link.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

**Technical Solution**

According to an aspect of the present disclosure, provided herein is a method of performing communication by a device in which a forwarding link for forwarding a signal received from a user equipment (UE) and a control link are formed with a base station (BS) in a wireless communication system, including configuring, through the control link, a first time resource on which a forwarding operation on the forwarding link is performed, receiving resource allocation information about a second time resource on which transmission of an uplink signal on the control link is performed, and determining whether to perform transmission of the uplink signal with priority over the forwarding operation on the second time resource overlapping with the first time resource based on a type or payload of the uplink signal.

Alternatively, transmission of the uplink signal may be performed with priority over the forwarding operation based on the uplink signal including uplink control information (UCI).

Alternatively, the device may determine, based on the uplink signal including the UCI, that the forwarding operation on the first time resource overlapping with the second time resource is set to OFF based on the resource allocation information.

Alternatively, transmission of the UL signal may be dropped based on the uplink signal not including the UCI.

Alternatively, transmission of the uplink signal is performed with priority over the forwarding operation based on the uplink signal being a dynamic grant physical uplink shared channel (DG PUSCH).

Alternatively, transmission of the uplink signal may be performed with priority over the forwarding operation based on the uplink signal being a configured grant physical uplink shared channel (CG PUSCH) of Type 1 or Type 2.

Alternatively, transmission of the uplink signal may be performed with priority over the forwarding operation based on the uplink signal being an uplink signal for a random access channel (RACH) procedure.

Alternatively, the first time resource may be configured through side control information for control of the forwarding link.

Alternatively, the forwarding operation on the forwarding link may be skipped on a time resource on transmission of the uplink signal is performed.

Alternatively, the device may be a network-controlled repeater (NCR).

In another aspect of the present disclosure, provided herein is a device in which a forwarding link for forwarding a signal received from a user equipment (UE) and a control link are formed with a base station (BS) in a wireless communication system, including a radio frequency (RF) transceiver, and a processor configured to control the RF transceiver. The processor configures, through the control link, a first time resource on which a forwarding operation on the forwarding link is performed, receives resource allocation information about a second time resource on which transmission of an uplink signal on the control link is performed, and determines whether to perform transmission of the uplink signal with priority over the forwarding operation on the second time resource overlapping with the first time resource based on a type or payload of the uplink signal.

In another aspect of the present disclosure, provided herein is a chipset for controlling a device in which a forwarding link for forwarding a signal received from a user equipment (UE) and a control link are formed with a base station (BS) in a wireless communication system, including at least one processor, and at least one memory operatively connected to the at least one processor and configured to cause, when executed, the at least one processor to perform operations. The operations include configuring, through the control link, a first time resource on which a forwarding operation on the forwarding link is performed, receiving resource allocation information about a second time resource on which transmission of an uplink signal on the control link is performed, and determining whether to perform transmission of the uplink signal with priority over the forwarding operation on the second time resource overlapping with the first time resource based on a type or payload of the uplink signal.

**Advantageous Effects**

According to various embodiments, TDM between a forwarding operation on a forwarding link and a transmission operation of an uplink signal on a control link is efficiently performed.

Alternatively, delay in a control operation of a base station for a device is minimized by exceptionally allowing an uplink transmission operation on a control link in a specific situation even in a time interval of a forwarding operation on a forwarding link.

Effects to be achieved by embodiment(s) are not limited to what has been particularly described hereinabove and other effects not mentioned herein will be more clearly understood by persons skilled in the art to which embodiment(s) pertain from the following detailed description.

**Brief Description of Drawings**

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.

FIG. 2 illustrates the structure of an NR system to which embodiment(s) are applicable.

FIG. 3 illustrates the structure of an NR radio frame to which embodiment(s) are applicable.

FIG. 4 illustrates the slot structure of an NR frame to which embodiment(s) are applicable.

FIG. 5 illustrates an example of mapping physical channels in a slot.

FIG. 6 illustrates an exemplary PDCCH transmission/reception process.

FIG. 7 schematically illustrates an example of a parent link and a child link.

FIG. 8 is a diagram illustrating an example of topology in which a network-controlled repeater (NCR) performs transmission and reception between the gNB and the UE.

FIG. 9 is a diagram illustrating a radio frequency (RF) repeater and an NCR.

FIG. 10 is a diagram illustrating a method for a device to perform a forwarding operation on a forwarding link and an uplink transmission operation on a control link.

FIG. 11 illustrates a communication system applied to the present disclosure.

FIG. 12 illustrates wireless devices applicable to the present disclosure.

FIG. 13 illustrates another example of a wireless device to which the present disclosure is applied.

**BEST MODE**

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

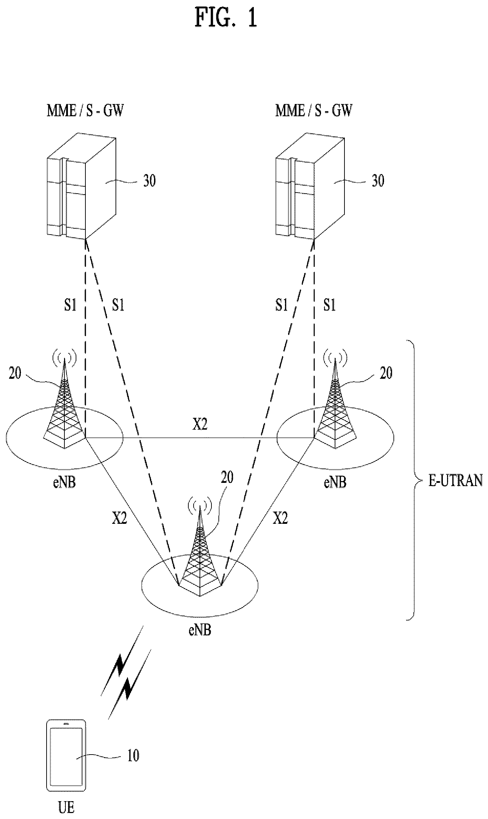

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

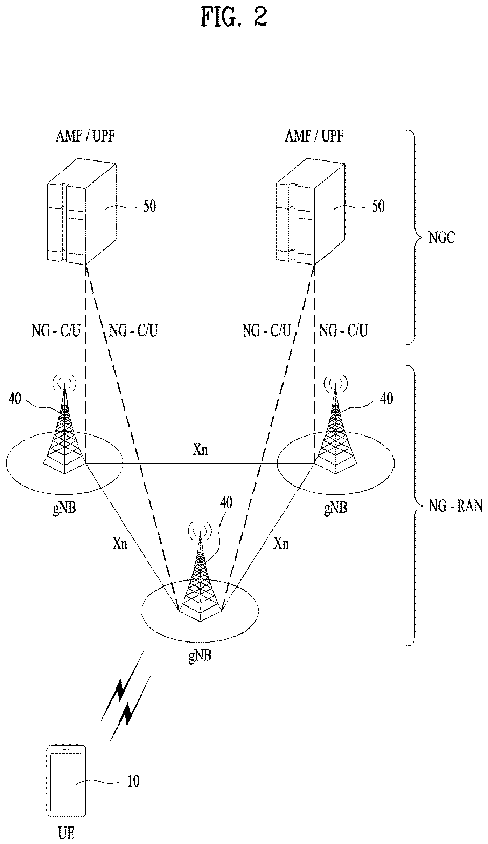

FIG. 2 illustrates the structure of a NR system to which the present disclosure is applicable.

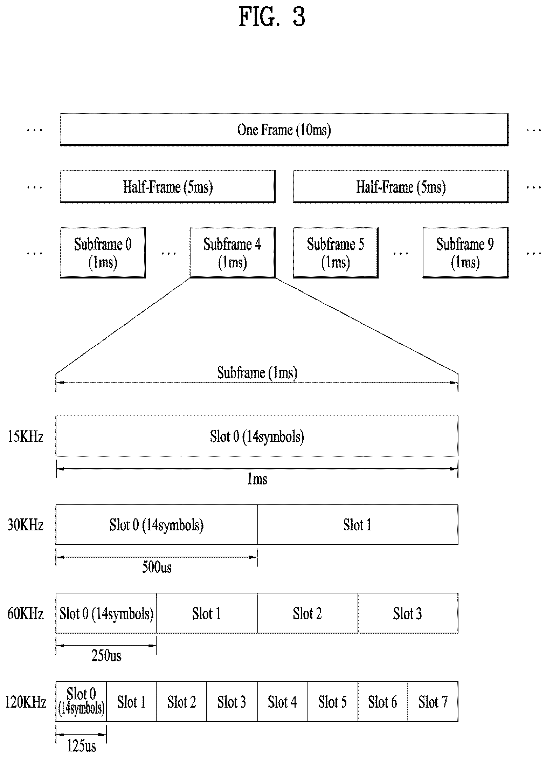

Referring to FIG. 2, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

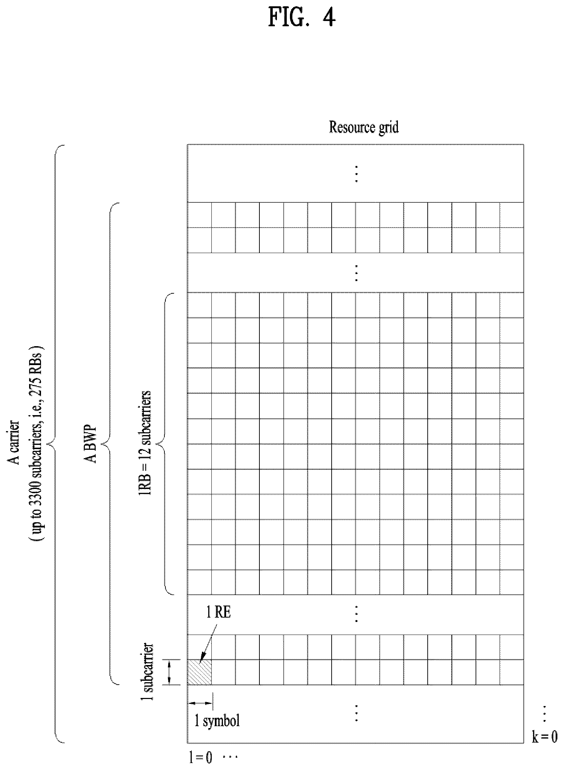

FIG. 4 illustrates the slot structure of a NR frame to which the present disclosure is applicable.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

**Bandwidth part (BWP)**

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

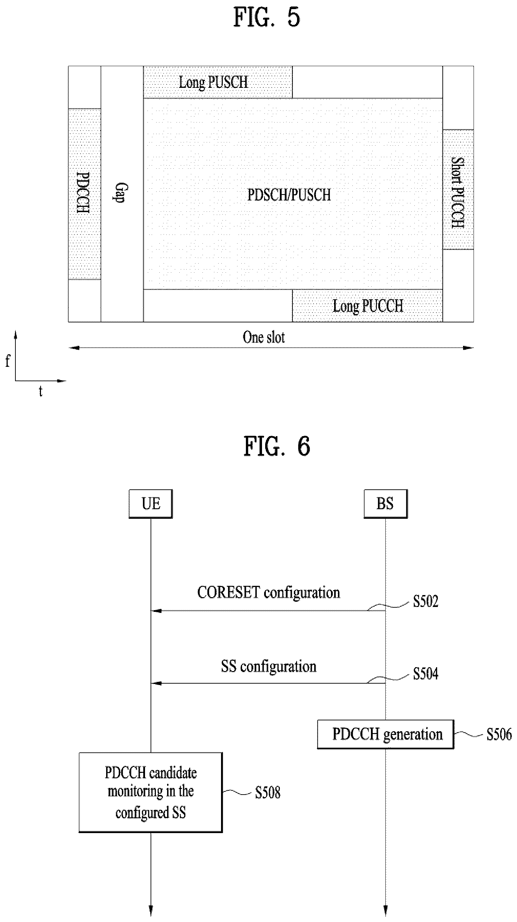

FIG. 5 illustrates an example of mapping physical channels in a slot.

A slot may include a DL control channel, DL or UL data, a UL control channel, etc., all of which are included. For example, the first N symbols in a slot may be used to transmit a DL control channel (hereinafter, referred to as a DL control region), and the last M symbols in the slot may be used to transmit a UL control channel (hereinafter, referred to as a UL control region). N and M are each integers greater than or equal to 0. A resource region (hereinafter, referred to as a data region) between the DL control region and the UL control region may be used for DL data transmission or UL data transmission. A time gap for DL-to-UL or UL-to-DL switching may exist between the control region and the data region. A PDCCH may be transmitted in the DL control region, and a PDSCH may be transmitted in the DL data region. Some symbols at the time of switching from DL to UL in a slot may be used as a time gap.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 6 illustrates an exemplary PDCCH transmission/reception process.

Referring to FIG. 6, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. System information (SIB1) broadcast in a cell includes cell-specific PDSCH configuration information, PDSCH-ConfigCommon. PDSCH-Config-Common includes a list (or look-up table) of parameters related to a time-domain resource allocation, pdsch-Time-DomainAllocationList. Each pdsch-TimeDomainAllocationList may include up to 16 entries (or rows) each being joint-encoded {K0, PDSCH mapping type, PDSCH start symbol and length (SLIV)}. Aside from (additionally to) pdsch-TimeDomainAllocationList configured through PDSCH-ConfigCommon, pdsch-TimeDomainAllocationList may be provided through a UE-specific PDSCH configuration, PDSCH-Config. pdsch-TimeDomainAllocationList configured UE-specifically has the same structure as pdsch-TimeDomainAllocationList provided UE-commonly. For K0 and an SLIV of pdsch-TimeDomainAllocationList, the following description is referred to.

Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={ 1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 5 shows the characteristics of each SS.

[Table 5]

| Type | Search Space | RNTI | Use Case |
|------|------|------|------|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 6 shows DCI formats transmitted on the PDCCH.

[Table 6]

| DCI format | Usage |
|------|------|
| 0_0 | Scheduling of PUSCH in one cell |
| 0_1 | Scheduling of PUSCH in one cell |
| 1_0 | Scheduling of PDSCH in one cell |

(continued)

| DCI format | Usage |
|---|---|
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

**RRC signaling for cell-specific signal or channel**

Hereinbelow, parameters for RRC signaling for a cell-specific signal or channel will be described in detail (refer to 3GPP TS 38.331).

First, *TDD-UL-DL-ConfigCommon* may be configuration information for determining/configuring a cell-specific UL/DL TDD configuration. *TDD-UL-DL-ConfigCommon* may include parameters defined in Table 7.

[Table 7]

| ***TDD-UL-DL-ConfigCommon* field descriptions** |
|---|
| ***referenceSubcarrierSpacing*** <br> Reference SCS used to determine the time domain boundaries in the UL-DL pattern which must be common across all subcarrier specific carriers, i.e., independent of the actual subcarrier spacing using for data transmission. Only the values 15, 30 or 60 kHz (FR1), and 60 or 120 kHz (FR2) are applicable. The network configures a not larger than any SCS of configured BWPs for the serving cell. The network or *SL-PreconfigGeneral* configures a not larger than the SCS of (pre-)configured SL BWP.See TS 38.213 [13], clause 11.1. |
| ***TDD-UL-DL-Pattern* field descriptions** |
| ***dl-UL-TransmissionPeriodicity*** <br> Periodicity of the DL-UL pattern, see TS 38.213 [13], clause 11.1. If the *dl-UL-TransmissionPeriodicity-v1530* is signalled, UE shall ignore the *dl-UL-TransmissionPeriodicity*(without suffix). |
| ***nrofDownlinkSlots*** |

(continued)

| TDD-UL-DL-Pattern field descriptions |
| --- |
| Number of consecutive full DL slots at the beginning of each DL-UL pattern, see TS 38.213 [13], clause 11.1. In this release, the maximum value for this field is 80. |
| **nrofDownlinkSymbols**<br>Number of consecutive DL symbols in the beginning of the slot following the last full DL slot (as derived from *nrof-DownlinkSlots*). The value 0 indicates that there is no partial-downlink slot. (see TS 38.213 [13], clause 11.1). |
| **nrofUplinkSlots**<br>Number of consecutive full UL slots at the end of each DL-UL pattern, see TS 38.213 [13], clause 11.1. In this release, the maximum value for this field is 80. |
| **nrofUplinkSymbols**<br>Number of consecutive UL symbols in the end of the slot preceding the first full UL slot (as derived from *nrofUplinkSlots*). The value 0 indicates that there is no partial-uplink slot. (see TS 38.213 [13], clause 11.1). |

Next, *BWP-DownlinkCommon* is configuration information used to configure common parameters of a DL BWP. That is, *BWP-DownlinkCommon* may include "cell-specific" parameters. Common parameters of an initial BWP of the PCell may also be provided through system information. For all other serving cells, a network may provide the common parameters through dedicated signaling. Specifically, *BWP-DownlinkCommon* may include parameters defined in Table 8.

[Table 8]

| BWP-DownlinkCommon field descriptions |
| --- |
| **pdcch-ConfigCommon**<br>Cell specific parameters for the PDCCH of this BWP. This field is absent for a dormant BWP. |
| **pdsch-ConfigCommon**<br>Cell specific parameters for the PDSCH of this BWP. |

Among the above-described parameters, *PDCCH-ConfigCommon* may be used to configure cell-specific PDCCH parameters provided through dedicated signaling as well as through an SIB. Referring to Table 9, *PDCCH-ConfigCommon* may include configuration parameters for a cell-specific PDCCH.

[Table 9]

| PDCCH-ConfigCommon field descriptions |
| --- |
| **commonControlResourceSet**<br>An additional common control resource set which may be configured and used for any common or UE-specific search space. If the network configures this field, it uses a *ControlResourceSetId* other than 0 for this *ControlResourceSet*. The network configures the *commonControlResourceSet* in *SIB1* so that it is contained in the bandwidth of CORESET#0. |
| **commonSearchSpaceList, commonSearchSpaceListExt**<br>A list of additional common search spaces. If the network configures this field, it uses the *SearchSpaceIds* other than 0. If the field is included, it replaces any previous list, i.e. all the entries of the list are replaced and each of the *SearchSpace* entries is considered to be newly created and the conditions and Need codes for setup of the entry apply. If the network includes *commonSearchSpaceListExt,* it includes the same number of entries, and listed in the same order, as in *commonSearchSpaceList* |
| **controlResourceSetZero**<br>Parameters of the common CORESET#0 which can be used in any common or UE-specific search spaces. The values are interpreted like the corresponding bits in *MIB pdcch-ConfigSIB1.* Even though this field is only configured in the initial BWP (BWP#0) *controlResourceSetZero* can be used in search spaces configured in other DL BWP(s) than the initial DL BWP if the conditions defined in TS 38.213 [13], clause 10 are satisfied. |
| **firstPDCCH-MonitoringOccasionOfPO** |

(continued)

| **PDCCH-ConfigCommon field descriptions** |
|---|
| Indicates the first PDCCH monitoring occasion of each PO of the PF on this BWP, see TS 38.304 [20]. |
| **pagingSearchSpace** <br><br> ID of the Search space for paging (see TS 38.213 [13], clause 10.1). If the field is absent, the UE does not receive paging in this BWP (see TS 38.213 [13], clause 10). |
| **ra-SearchSpace** <br><br> ID of the Search space for random access procedure (see TS 38.213 [13], clause 10.1). If the field is absent, the UE does not receive RAR in this BWP. This field is mandatory present in the DL BWP(s) if the conditions described in TS 38.321 [3], subclause 5.15 are met. |
| **searchSpaceOtherSystemInformation** <br><br> ID of the Search space for other system information, i.e., *SIB2* and beyond (see TS 38.213 [13], clause 10.1) If the field is absent, the UE does not receive other system information in this BWP. |
| **searchSpaceSIB1** <br><br> ID of the search space for *SIB1* message. In the initial DL BWP of the UE's PCell, the network sets this field to 0. If the field is absent, the UE does not receive *SIB1* in this BWP. (see TS 38.213 [13], clause 10) |
| **searchSpaceZero** <br><br> Parameters of the common SearchSpace#0. The values are interpreted like the corresponding bits in *MIB pdcch-ConfigSIB1*. Even though this field is only configured in the initial BWP (BWP#0), *searchSpaceZero* can be used in search spaces configured in other DL BWP(s) than the initial DL BWP if the conditions described in TS 38.213 [13], clause 10, are satisfied. |

*PDSCH-ConfigCommon* defined in Table 10 is configuration information used to configure a cell-specific PDSCH.

[Table 10]

```
    –   PDSCH-ConfigCommon

The IE PDSCH-ConfigCommon is used to configure cell specific PDSCH parameters.
                PDSCH-ConfigCommon information element

-- ASN1START
-- TAG-PDSCH-CONFIGCOMMON-START

PDSCH-ConfigCommon ::=              SEQUENCE {
    pdsch-TimeDomainAllocationList          PDSCH-TimeDomainResourceAllocationList          OPTIONAL,
-- Need R
    ...
}|

-- TAG-PDSCH-CONFIGCOMMON-STOP
-- ASN1STOP
```

| **PDSCH-ConfigCommon field descriptions** |
|---|
| **pdsch-TimeDomainAllocationList** <br> List of time-domain configurations for timing of DL assignment to DL data (see table 5.1.2.1.1-1 in TS 38.214 [19]). |

*IE ServingCellConfigCommon* defined in Table 11 may be used to configure cell-specific parameters of a serving cell of a UE. *ServingCellConfigCommon* may include parameters that the UE typically obtains from a synchronization signal block (SSB), an MIB or an SIB upon accessing a cell in an IDLE state.

[Table 11]

| ServingCellConfigCommon field descriptions |
|---|
| **channelAccessMode** |
| If present, this field indicates which channel access procedures to apply for operation with shared spectrum channel access as defined in TS 37.213 [48]. If the field is configured as "semiStatic", the UE shall apply the channel access procedures for semi-static channel occupancy as described in subclause 4.3 in TS 37.213. If the field is configured as "dynamic", the UE shall apply the channel access procedures in TS 37.213, with the exception of subclause 4.3 of TS 37.213. |
| **dmrs-TypeA-Position** |
| Position of (first) DM-RS for downlink (see TS 38.211 [16], clause 7.4.1.1.1) and uplink (TS 38.211 [16], clause 6.4.1.1.3). |
| **downlinkConfigCommon** |
| The common downlink configuration of the serving cell, including the frequency information configuration and the initial downlink BWP common configuration. The parameters provided herein should match the parameters configured by MIB and SIB1 (if provided) of the serving cell, with the exception of controlResourceSetZero and searchSpaceZero which can be configured in ServingCellConfigCommon even if MIB indicates that they are absent. |
| **discoveryBurstWindowLength** |
| Indicates the window length of the discovery burst in ms (see TS 37.213 [48]). |
| **longBitmap** |
| Bitmap when maximum number of SS/PBCH blocks per half frame equals to 64 as defined in TS 38.213 [13], clause 4.1. |
| **lte-CRS-ToMatchAround** |
| Parameters to determine an LTE CRS pattern that the UE shall rate match around. |
| **mediumBitmap** |
| Bitmap when maximum number of SS/PBCH blocks per half frame equals to 8 as defined in TS 38.213 [13], clause 4.1. |
| **n-TimingAdvanceOffset** |
| The N_TA-Offset to be applied for all uplink transmissions on this serving cell. If the field is absent, the UE applies the value defined for the duplex mode and frequency range of this serving cell. See TS 38.133 [14], table 7.1.2-2. |
| **rateMatchPatternToAddModList** |
| Resources patterns which the UE should rate match PDSCH around. The UE rate matches around the union of all resources indicated in the rate match patterns. Rate match patterns defined here on cell level apply only to PDSCH of the same numerology (see TS 38.214 [19], clause 5.1.4.1). |
| **shortBitmap** |
| Bitmap when maximum number of SS/PBCH blocks per half frame equals to 4 as defined in TS 38.213 [13], clause 4.1. |
| **ss-PBCH-BlockPower** |
| Average EPRE of the resources elements that carry secondary synchronization signals in dBm that the NW used for SSB transmission, see TS 38.213 [13], clause 7. |
| **ssb-periodicityServingCell** |
| The SSB periodicity in ms for the rate matching purpose. If the field is absent, the UE applies the value ms5. (see TS 38.213 [13], clause 4.1) |
| **ssb-PositionQCL** |
| Indicates the QCL relation between SSB positions for this serving cell as specified in TS 38.213 [13], clause 4.1. |
| **ssb-PositionsInBurst** |
| For operation in licensed spectrum, indicates the time domain positions of the transmitted SS-blocks in a half frame with SS/PBCH blocks as defined in TS 38.213 [13], clause 4.1. The first/leftmost bit corresponds to SS/PBCH block index 0, the second bit corresponds to SS/PBCH block index 1, and so on. Value 0 in the bitmap indicates that the corresponding SS/PBCH block is not transmitted while value 1 indicates that the corresponding SS/PBCH block is transmitted. The network configures the same pattern in this field as in the corresponding field in ServingCellConfigCommonSIB. For operation with shared spectrum channel access, only mediumBitmap is used and the UE assumes that one or more SS/PBCH blocks indicated by ssb-PositionsInBurst may be transmitted within the discovery burst transmission window and have candidate SS/PBCH blocks indexes corresponding to SS/PBCH block indexes provided by ssb-PositionsInBurst (see TS 38.213 [13], clause 4.1). If the k-th bit of ssb-PositionsInBurst is set to 1, the UE assumes that one or more SS/PBCH blocks within the discovery burst transmission window with candidate SS/PBCH block indexes corresponding to SS/PBCH block index equal to k – 1 may be transmitted; if the kt-th bit is set to 0, the UE assumes that the corresponding SS/PBCH block(s) are not transmitted. The k-th bit is set to 0, where k > ssb-PositionQCL and the number of actually transmitted SS/PBCH blocks is not larger than the number of 1's in the bitmap. The network configures the same pattern in this field as in the corresponding field in ServingCellConfigCommonSIB. |
| **ssbSubcarrierSpacing** |
| Subcarrier spacing of SSB. Only the values 15 kHz or 30 kHz (FR1), and 120 kHz or 240 kHz (FR2) are applicable. |
| **supplementaryUplinkConfig** |
| The network configures this field only if uplinkConfigCommon is configured. If this field is absent, the UE shall release the supplementaryUplinkConfig and the supplementaryUplink configured in ServingCellConfig of this serving cell, if configured. |
| **tdd-UL-DL-ConfigurationCommon** |
| A cell-specific TDD UL/DL configuration, see TS 38.213 [13], clause 11.1. |

ServingCellConfigCommonSIB defined in Table 12 may be used to configure cell-specific parameters of a serving cell of a UE in SIB1.

[Table 12]

| ServingCellConfigCommonSIB field descriptions |
|---|
| **channelAccessMode** |

(continued)

| ***ServingCellConfigCommonSIB* field descriptions** |
|---|
| If present, this field indicates which channel access procedures to apply for operation with shared spectrum channel access as defined in TS 37.213 [48]. If the field is configured as "semiStatic", the UE shall apply the channel access procedures for semi-static channel occupancy as described in subclause 4.3 in TS 37.213. If the field is configured as "dynamic"t, the UE shall apply the channel access procedures in TS 37.213, with the exception of subclause 4.3 of TS 37.213. |
| ***discoveryBurstWindowLength***<br>Indicates the window length of the discovery burst in ms (see TS 37.213 [48]). |
| ***groupPresence***<br>This field is present when maximum number of SS/PBCH blocks per half frame equals to 64 as defined in TS 38.213 [13], clause 4.1. The first/leftmost bit corresponds to the SS/PBCH index 0-7, the second bit corresponds to SS/PBCH block 8-15, and so on. Value 0 in the bitmap indicates that the SSBs according to *inOneGroup* are absent. Value 1 indicates that the SS/PBCH blocks are transmitted in accordance with *inOneGroup.* |
| ***inOneGroup***<br>When maximum number of SS/PBCH blocks per half frame equals to 4 as defined in TS 38.213 [13], clause 4.1, only the 4 leftmost bits are valid; the UE ignores the 4 rightmost bits. When maximum number of SS/PBCH blocks per half frame equals to 8 as defined in TS 38.213 [13], clause 4.1, all 8 bits are valid. The first leftmost bit corresponds to SS/PBCH block index 0, the second bit corresponds to SS/PBCH block index 1, and so on. When maximum number of SS/PBCH blocks per half frame equals to 64 as defined in TS 38.213 [13], clause 4.1, all 8 bit are valid; The first/ leftmost bit corresponds to the first SS/PBCH block index in the group (i.e., to SSB index 0, 8, and so on); the second bit corresponds to the second SS/PBCH block index in the group (i.e., to SSB index 1, 9, and so on), and so on. Value 0 in the bitmap indicates that the corresponding SS/PBCH block is not transmitted while value 1 indicates that the corresponding SS/PBCH block is transmitted. |
| ***n-TimingAdvanceOffset***<br>The N_TA-Offset to be applied for random access on this serving cell. If the field is absent, the UE applies the value defined for the duplex mode and frequency range of this serving cell. See TS 38.133 [14], table 7.1.2-2. |
| ***ssb-PositionsinBurst***<br>Time domain positions of the transmitted SS-blocks in an SS-burst as defined in TS 38.213 [13], clause 4.1. For operation with shared spectrum channel access, only *inOneGroup* is used and the UE interprets this field same as *mediumBitmap* in *ServingCellConfigCommon.* The UE assumes that a bit at position $k > N_{SSB}^{QCL}$ is 0, where $N_{SSB}^{QCL}$ is obtained from *MIB* as specified in TS 38.213 [13], clause 4.1. |
| ***ss-PBCH-BlockPower***<br>Average EPRE of the resources elements that carry secondary synchronization signals in dBm that the NW used for SSB transmission, see TS 38.213 [13], clause 7. |

BWP-UplinkCommon defined in Table 13 may be used to configure common parameters of a UL BWP and configures parameters for a cell-specific signal.

[Table 13]

| ***BWP-UplinkCommon* field descriptions** |
|---|
| ***msgA-ConfigCommon***<br>Configuration of the cell specific PRACH and PUSCH resource parameters for transmission of MsgA in 2-step random access type procedure. The NW can configure *msgA-ConfigCommon* only for UL BWPs if the linked DL BWPs (same bwp-Id as UL-BWP) are the initial DL BWPs or DL BWPs containing the SSB associated to the initial BL BWP |
| ***pucch-ConfigCommon***<br>Cell specific parameters for the PUCCH of this BWP. |
| ***pusch-ConfigCommon***<br>Cell specific parameters for the PUSCH of this BWP. |

(continued)

| BWP-UplinkCommon field descriptions |
|---|
| **rach-ConfigCommon**<br>Configuration of cell specific random access parameters which the UE uses for contention based and contention free random access as well as for contention based beam failure recovery in this BWP. The NW configures SSB-based RA (and hence *RACH-ConfigCommon*) only for UL BWPs if the linked DL BWPs (same *bwp-Id* as UL-BWP) are the initial DL BWPs or DL BWPs containing the SSB associated to the initial DL BWP. The network configures *rach-ConfigCommon,* whenever it configures contention free random access (for reconfiguration with sync or for beam failure recovery). |
| **rach-ConfigCommonIAB**<br>Configuration of cell specific random access parameters for the IAB-MT. The IAB specific IAB RACH configuration is used by IAB-MT, if configured. |
| **useInterlacePUCCH-PUSCH**<br>If the field is present, the UE uses uplink frequency domain resource allocation Type 2 for cell-specific PUSCH, e.g., PUSCH scheduled by RAR UL grant (see 38.213 clause 8.3 and 38.214 clause 6.1.2.2) and uses interlaced PUCCH Format 0 and 1 for cell-specific PUCCH (see TS 38.213 [13], clause 9.2.1). |

*initialDownlinkBWP* defined in Table 14 may be used to configure an initial DL BWP.

[Table 14]

| DownlinkConfigCommonSIB field descriptions |
|---|
| **bcch-Config**<br>The modification period related configuration. |
| **frequencyInfoDL-SIB**<br>Basic parameters of a downlink carrier and transmission thereon. |
| **initialDownlinkBWP**<br>The initial downlink BWP configuration for a PCell. The network configures the *locationAndBandwidth* so that the initial downlink BWP contains the entire CORESET#0 of this serving cell in the frequency domain. The UE applies the *locationAndBandwidth* upon reception of this field (e.g. to determine the frequency position of signals described in relation to this *locationAndBandwidth*) but it keeps CORESET#0 until after reception of *RRCSetup*/*RRCResume*/*RRCReestablishment.* |
| **nrofPDCCH-MonitoringOccasionPerSSB-InPO**<br>The number of PDCCH monitoring occasions corresponding to an SSB within a Paging Occasion, see TS 38.304 [20], clause 7.1. |
| **pcch-Config**<br>The paging related configuration. |

*PUCCH-ConfigCommon* defined in Table 15 may be used to configure cell-specific PUCCH parameters.

[Table 15]

| PUCCH-ConfigCommon field descriptions |
|---|
| **hoppingId**<br>Cell-specific scrambling ID for group hopping and sequence hopping if enabled, see TS 38.211 [16], clause 6.3.2.2. |
| **p0-nominal**<br>Power control parameter P0 for PUCCH transmissions. Value in dBm. Only even values (step size 2) allowed (see TS 38.213 [13], clause 7.2). |
| **pucch-GroupHopping**<br>Configuration of group- and sequence hopping for all the PUCCH formats 0, 1, 3 and 4. Value *neither* implies neither group or sequence hopping is enabled. Value *enable* enables group hopping and disables sequence hopping. Value *disable* disables group hopping and enables sequence hopping (see TS 38.211 [16], clause 6.3.2.2). |

(continued)

| PUCCH-ConfigCommon field descriptions |
|---|
| **pucch-ResourceCommon**<br>An entry into a 16-row table where each row configures a set of cell-specific PUCCH resources/parameters. The UE uses those PUCCH resources until it is provided with a dedicated *PUCCH-Config* (e.g. during initial access) on the initial uplink BWP. Once the network provides a dedicated *PUCCH-Config* for that bandwidth part the UE applies that one instead of the one provided in this field (see TS 38.213 [13], clause 9.2). |

*PUSCH-ConfigCommon* defined in Table 16 may be used to configure cell-specific PUSCH parameters.

[Table 16]

| PUSCH-ConfigCommon field descriptions |
|---|
| **groupHoppingEnabledTransformPrecoding**<br>For DMRS transmission with transform precoder, the NW may configure group hopping by this cell-specific parameter, see TS 38.211 [16], clause 6.4.1.1.1.2. |
| **msg3-DeltaPreamble**<br>Power offset between msg3 and RACH preamble transmission. Actual value = field value * 2 [dB] (see TS 38.213 [13], clause 7.1) |
| **p0-NominalWithGrant**<br>P0 value for PUSCH with grant (except msg3). Value in dBm. Only even values (step size 2) allowed (see TS 38.213 [13], clause 7.1) This field is cell specific |
| **pusch-TimeDomainAllocationList**<br>List of time domain allocations for timing of UL assignment to UL data (see TS 38.214 [19], table 6.1.2.1.1-1). |

*RACH-ConfigCommon* defined in Table 17 may be used to specify or configure cell-specific random access parameters.

[Table 17]

| RACH-ConfigCommon field descriptions |
|---|
| **messagePowerOffsetGroupB**<br>Threshold for preamble selection. Value is in dB. Value *minusinfinity* corresponds to -infinity. Value *dB0* corresponds to 0 dB, *dB5* corresponds to 5 dB and so on. (see TS 38.321 [3], clause 5.1.2) |
| **msg1-SubcarrierSpacing**<br>Subcarrier spacing of PRACH (see TS 38.211 [16], clause 5.3.2). Only the values 15 or 30 kHz (FR1), and 60 or 120 kHz (FR2) are applicable. If absent, the UE applies the SCS as derived from the *prech-ConfigurationIndex* in *RACH-ConfigGeneric* (see tables Table 6.3.3.1-1, Table 6.3.3.1-2, Table 6.3.3.2-2 and Table 6.3.3.2-3, TS 38.211 [16]). The value also applies to contention free random access (*RACH-ConfigDedicated*), to SI-request and to contention-based beam failure recovery (CB-BFR). But it does not apply for contention free beam failure recovery (CF-BFR) (see *BeamFailureRecoveryConfig*). |
| **msg3-transformPrecoder**<br>Enables the transform precoder for Msg3 transmission according to clause 6.1.3 of TS 38.214 [19]. If the field is absent, the UE disables the transformer precoder (see TS 38.213 [13], clause 8.3). |
| **numberOfRA-PreamblesGroupA**<br>The number of CB preambles per SSB in group A. This determines implicitly the number of CB preambles per SSB available in group B. (see TS 38.321 [3], clause 5.1.1). The setting should be consistent with the setting of *ssb-per-RACH-OccasionAndCB-PreamblesPerSSB*. |
| **prach-RootSequenceIndex** |

(continued)

| RACH-ConfigCommon field descriptions |
|---|
| PRACH root sequence index (see TS 38.211 [16], clause 6.3.3.1). The value range depends on whether L=839 or L=139 or L=571 or L=1151. The length of the root sequence corresponding with the index indicated in this IE should be consistent with the one indicated in *prach-ConfigurationIndex* in the *RACH-ConfigDedicated* (if configured). If *prach-RootSequenceIndex-r16* is signalled, UE shall ignore the *prach-RootSequenceIndex* (without suffix). |
| *ra-ContentionResolutionTimer*<br>The initial value for the contention resolution timer (see TS 38.321 [3], clause 5.1.5). Value *sf8* corresponds to 8 subframes, value *sf16* corresponds to 16 subframes, and so on. |
| *ra-Msg3SizeGroupA*<br>Transport Blocks size threshold in bits below which the UE shall use a contention-based RA preamble of group A. (see TS 38.321 [3], clause 5.1.2). |
| *ra-Prioritization*<br>Parameters which apply for prioritized random access procedure on any UL BWP of SpCell for specific Access Identities (see TS 38.321 [3], clause 5.1.1a). |
| *ra-PrioritizationForAI*<br>Indicates whether the field *ra-Prioritization-r16* applies for Access Identities. The first/leftmost bit corresponds to Access Identity 1, the next bit corresponds to Access Identity 2. Value 1 indicates that the field *ra-Prioritization-r16* applies otherwise the field does not apply (see TS 23.501 [32]). |
| *rach-ConfigGeneric*<br>RACH parameters for both regular random access and beam failure recovery. |
| *restrictedSetConfig*<br>Configuration of an unrestricted set or one of two types of restricted sets, see TS 38.211 [16] clause 6.3.3.1. |
| *rsrp-ThresholdSSB*<br>UE may select the SS block and corresponding PRACH resource for path-loss estimation and (re)transmission based on SS blocks that satisfy the threshold (see TS 38.213 [13]). |

In this way, RRC configuration information such as *TDD-UL-DL-ConfigCommon, BWP-DownlinkCommon, PDCCH-ConfigCommon, PDSCH-ConfigCommon, ServingCellConfigCommonSIB, BWP-UplinkCommon, initialDownlinkBWP, PUCCH-ConfigCommon, PUSCH-ConfigCommon,* and *RACH-ConfigCommon* may provide configuration information about transmission parameters for a cell-specific signal or channel and/or transmission resources.

**IAB (Integrated Access/Backhaul)**

Such integrated access and backhaul links may be formed in a network, where an IAB node or relay node (rTRP) can multiplex access and backhaul links in time, frequency, or space (e.g., beam-based operations).

The operations of different links may be at the same or different frequencies (also referred to as 'in-band' and 'out-band' relays). Efficient support of an out-band relay is important in some NR deployment scenarios, but it is very important to understand in-band operational requirements, which mean close interaction with an access link operating at the same frequency, to accept duplex constraints and avoid/mitigate interference.

In addition, operating an NR system in the mmWave spectrum may present several unique challenges, including experiencing severe short-term blocking that may not be easily mitigated by current RRC-based handover mechanisms due to the larger time scale required to complete a procedure in comparison to short-term blocking.

To overcome short-term blocking in mmWave systems, it may require a fast RAN-based mechanism (which does not necessarily require intervention of a core network) for inter-rTRP switching.

The need to mitigate short-term blocking of an NR operation in mmWave spectrum with the need for easier deployment of a self-backhauled NR cell may lead to the need for the development of an integrated framework that enables fast switching of access and backhaul links.

In addition, Over-The-Air (OTA) coordination between rTRPs may be considered as mitigating interference and supporting end-to-end route selection and optimization.

The following requirements and aspects may need to be resolved by an integrated access and wireless backhaul (IAB) for NR.

- Efficient and flexible operation for in-band and out-band broadcasting in indoor and outdoor scenarios
- Multi-hop and redundant connections
- End-to-end route selection and optimization
- Backhaul link support with high spectrum efficiency
- Legacy NR UE support

Legacy NR (new RAT) is designed to support half-duplex devices. In addition, half duplex of an IAB scenario is supported and worthy of being targeted. Furthermore, a full duplex IAB device may be studied.

In the IAB scenario, if each IAB node or Relay Node (RN) does not have scheduling capability, a Donor gNB (DgNB) must schedule the entire links among DgNB-related RNs and UEs. In other words, the DgNB may collect traffic information from all related RNs, make scheduling decisions for all links, and then inform each RN of schedule information.

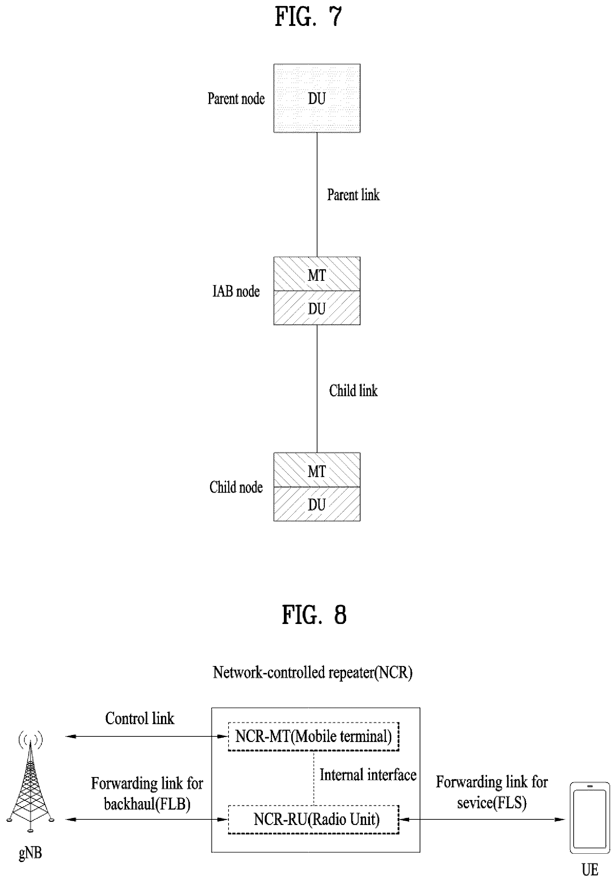

FIG. 7 schematically illustrates an example of a parent link and a child link.

As shown in FIG. 7, a link between an IAB node and a parent node is called a parent link, and a link between an IAB node and a child node/UE is called a child link. That is, a link between MT and parent DU is called a parent link, and a link between DU and child MT/UE is called a child link.

Yet, depending on interpretation or perspective, a link between an IAB node and a parent node may be called a backhaul link, and a link between an IAB node and a child node/UE may be called an access link.

An IAB node may receive a slot format configuration for communication with a parent node and a slot format configuration for communication with a child node/access UE.

In the existing IAB node, a TDM operation in which a DU and an MT operate through different time resources has been performed. On the other hand, resource multiplexing such as SDM/FDM, FC, etc. between the DU and the MT is required for efficient resource operation. As shown in FIG. 7, a link between the IAB node (IAB MT) and the parent node is referred to as a parent link, and a link between the IAB node (IAB DU) and the child node (child MT) is referred to as a child link. At this time, the TDM operation between the parent link and the child link has been discussed, and the SDM/FDM and FD operations are being discussed.

The DU and the MT existing in the same IAB node (or co-located) cannot operate simultaneously due to intra-node interference, slot/symbol boundary misalignment, power sharing, etc., and can operate in TDM. On the other hand, multiplexing of SDM/FDM may be used between the DU and the MT. Such multiplexing is applicable to an example case in which, since DU and MT use different panels, there is little interference between the panels. In this case, DU and MT existing (or co-located) in the same IAB node can transmit or receive data or information simultaneously, but it is impossible for each of the DU and the MT to perform transmission and reception simultaneously or to perform reception and transmission simultaneously.

Alternatively, FD may be used between the DU and the MT. This is applicable in cases where there is little interference between the DU and the MT, such as when a frequency domain where the DU operates and a frequency domain where the MT operates are far apart. In this case, the DU and the MT existing in the same IAB node (or co-located) can freely transmit and receive data simultaneously. The DU and the MT can transmit or receive data simultaneously, and it is also possible for each of the DU and the MT to perform transmission and reception simultaneously or to perform reception and transmission simultaneously.

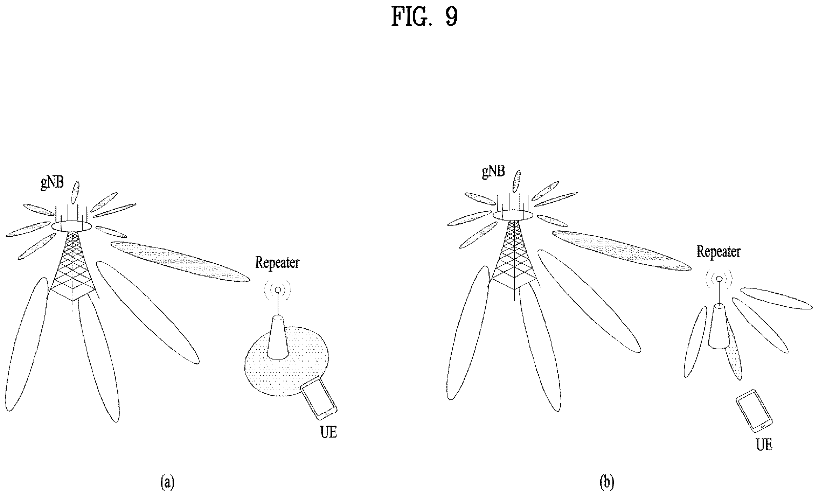

N MT-CCs and M DU-cells may exist in the IAB node. FIG. 9 shows an example where the IAB node is composed of three MT-CCs (where N=3) and three DU-cells (where M=3). MT-CCs existing in the IAB node may operate through the same or different frequency resources, and one MT-CC may be connected to one or more parent DU-cells. DU-cells existing in the IAB node may operate through the same or different frequency resources.

For a specific MT-CC/DU-cell pair within the IAB node, the MT-CC and the DU-cell may be in either TDM relationship or no-TDM relationship for the following four Tx/Rx direction combinations, and TDM or no-TDM may vary for each Tx/Rx combination.

- DU-Tx / MT-Tx
- DU-Rx / MT-Rx
- DU-Tx / MT-Rx
- DU-Rx / MT-Tx

For example, for a specific MT-CC/DU-cell pair, all of the four Tx/Rx combinations can operate with TDM. In this case, the corresponding DU-cell and the corresponding MT-CC should always operate with TDM regardless of Tx/Rx directions of the DU-cell and the MT-CC. In another example, for a specific MT-CC/DU-cell pair, all of the four Tx/Rx combinations can operate with no-TDM. In this case, the corresponding DU-cell and MT-CC can always operate simultaneously with no-TDM regardless of the Tx/Rx directions of the DU-cell and MT-CC. In another example, for a specific MT-CC/DU-cell pair, DU-Tx/MT-Tx and DU-Rx/MT-Rx can operate with no-TDM, and DU-Tx/MT-Rx and DU-Rx/MT-Tx can operate with TDM. The above-described operation relates to a method (e.g., SDM/FDM) for allowing simultaneous operation when the Tx/Rx directions of the DU-cell and the MT-CC are the same, and this method can operate simultaneously when the Tx/Rx directions of the DU-cell and the MT-CC are the same. TDM/no-TDM information for each Tx/Rx combination can be configured/determined differently or independently for each specific MT-CC/DU-cell pair within the IAB node.

At this time, the IAB MT may be connected to two parent DUs using, for example, a dual-connectivity method or a DAPS-HO method.

## Network-controlled repeater (NCR) in NR

Coverage is a fundamental aspect of cellular network deployments. Mobile operators rely on different types of network nodes to offer blanket coverage in their deployments. Deployment of regular full-stack cells is one option but it may not be always possible (e.g., no availability of backhaul) or economically viable. As a result, new types of network nodes have been considered to increase mobile operators' flexibility for their network deployments. For example, Integrated Access and Backhaul (IAB) was introduced in Rel-16 and enhanced in Rel-17 as a new type of network node not requiring a wired backhaul. Another type of network node is the RF repeater which simply amplify-and-forward any signal that they receive. RF repeaters have seen a wide range of deployments in 2G, 3G and 4G to supplement the coverage provided by regular full-stack cells. In Rel-17, RAN4 specified RF and EMC requirements for such RF repeaters for NR targeting both FR1 and FR2. While an RF repeater presents a cost effective means of extending network coverage, it has its limitations. An RF repeater simply does an amplify-and-forward operation without being able to take into account various factors that could improve performance. Such factors may include information on semi-static and/or dynamic downlink/uplink configuration, adaptive transmitter/receiver spatial beamforming, ON-OFF status, etc.

A network-controlled repeater is an enhancement over conventional RF repeaters with the capability to receive and process side control information from the network. Side control information could allow a network-controlled repeater to perform its amplify-and-forward operation in a more efficient manner. Potential benefits could include mitigation of unnecessary noise amplification, transmissions and receptions with better spatial directivity, and simplified network integration.

FIG. 8 is a diagram illustrating an example of topology in which a network-controlled repeater (NCR) performs transmission and reception between the gNB and the UE.

Referring to FIG. 8, the NCR may include a radio unit (RU) and a mobile terminal (MT).

The gNB may include a central unit (CU) and/or a distributed unit (DU), and the NCR may be connected to the gNB. In the NCR, the MT may form a control link with the gNB, and the RU may form a forwarding link for backhaul with the gNB and a forwarding link for access with the UE.

The RU of the NCR may be composed of only an RF layer. The RU may receive a signal transmitted by the gNB through the forwarding link at the RF end and may forward the received signal to the UE. As a result, the signal received from the UE may be received by the RF end, and the received signal may be forwarded to the gNB. The RU may only transmit signals between the gNB and the UE, and may not generate signals/channels by itself and transmit the generated signals/channels to the gNB/UE. Alternatively, the RU receives signals/channels from the gNB/UE, but does not detect the received signals/channels. In order to forward the received signal, the RU may control the directions of the Tx/Rx beams, the DL/UL directions, ON/OFF information, transmission (Tx) power, etc. in the RF end. However, this RU operation cannot be determined by the NCR itself, and can be entirely controlled by the gNB.

The MT of the above NCR may include an RF layer and L1, L2, and/or L3 layers. For example, the MT may include only an RF layer and an L1 layer or may include the L1 and L2 layers. Alternatively, the MT may include an RF layer and L1/L2/L3 layers. The MT may detect/receive a signal/channel transmitted by the gNB and may generate a signal/channel to be transmitted to the gNB. In addition, the MT may receive information (e.g., side control information) necessary to control the operation of the RU from the gNB. Meanwhile, the MT may not perform transmission and reception with the UE.

FIG. 9 is a diagram illustrating the radio frequency (RF) repeater and the NCR.

Referring to FIG. 9(a), the existing RF repeater may perform beamforming to which an omni-direction or fixed direction is applied. In contrast, referring to FIG. 9(b), the NCR can adaptively adjust the transmission/reception beam directions of the NCR according to the UE position and the channel condition of the UE, thereby obtaining a beamforming gain.

In addition, in the case of the existing RF repeater, since the DL/UL directions are not distinguished from each other in the TDD system, transmission and reception in the DL and UL directions are always performed simultaneously. Alternatively, only the fixed TDD configuration is applied to the existing RF repeater, so that switching between the DL direction and UL direction has been performed using a fixed time pattern. In contrast, the NCR may perform DL/UL switching in consideration of a TDD configuration. Through this, switching is being considered. As a result, the NCR can enable adaptive DL/UL operation, may minimize power consumption caused by forwarding unnecessary signals, and may also minimize interference.

In addition, in the case of the existing RF repeater, the power of a signal that is received regardless of whether the gNB and the UE transmit signals is always amplified and transmitted. As a result, unnecessary power consumption and interference to the surroundings are unavoidably increased. In contrast, the NCR performs ON/OFF operations, and when there is no signal to be transmitted to the gNB and UE, the operation of the RU is turned off, so that unnecessary signals are not transmitted.

In addition, in the case of existing RF repeaters, power of a signal received at a fixed ratio is amplified and transmitted. When a signal is transmitted with unnecessarily large power, interference affecting the surroundings may decrease by reducing transmission (Tx) power of the NCR. When a signal is transmitted with low power, transmission (Tx) power of the NCR is increased so that the signal can be stably transmitted to the receiver.

In addition, the existing RF repeater has been operated without recognizing a DL/UL slot boundary. On the other hand, in order for the NCR to adaptively adjust beamforming, ON/OFF, DL/UL directions, transmission power, etc. as described above, the NCR must know transmission/reception (Tx/Rx) boundaries of a downlink (DL). As a result, the RU operation can be applied differently for each unit time (e.g., slot/symbol).

**Side control information for NCR**

Hereinafter, the operation in the NCR will be assumed for convenience of description. However, the content described below can be applied to devices other than the NCR. In particular, the content described below can be applied for the operation of RIS. To this end, the NCR mentioned in the present disclosure can be replaced with 'RIS' and expanded/interpreted. In this case, the RU may serve to forward signals from the gNB to the UE in RIS and to forward signals from the UE to the gNB in RIS, and the MT may serve to receive side control information required for controlling signal transmission of the RU from the gNB. Meanwhile, the term "network" may hereinafter be interpreted as "gNB" or "CU/DU". In addition, the term "gNB" may hereinafter be interpreted as "network", "CU", or "DU".

In order for the NCR to forward the signal received by the RU, it may be considered that the directions of transmission/reception (Tx/Rx) beams, DL/UL directions, ON/OFF states, transmission (Tx) power, etc. are adjusted at the RF end. However, the RU operation cannot be determined by the NCR itself, and may be entirely controlled by the gNB. To this end, the MT may receive information (i.e., side control information) necessary to control the RU operation from the gNB. This side control information may be transmitted through L1/L2 signaling such as MAC-CE and DCI.

The above-described side control information may include all or part of the following information.

- Beamforming information: Information on the transmission/reception (Tx/Rx) beam direction of the RU

Here, beamforming information may include a beam direction for UL transmission to the gNB, a beam direction for DL reception from the gNB, a beam direction for DL transmission to the UE, and/or a beam direction for UL reception from the UE.

- Timing information to align transmission/reception boundaries of network-controlled repeater (NCR): Information for the RU to align transmission/reception (Tx/Rx) slots symbol boundaries
- Information on UL-DL TDD configuration: information on DL/UL directions of the RU
- ON-OFF information for efficient interference management and improved energy efficiency: Information on ON-OFF operations of the RU
- Power control information for efficient interference management: Information on transmission (Tx) power of the RU, and such information may include UL transmission (Tx) power to the gNB and/or DL transmission (Tx) power to the UE.

The NCR may be composed of two parts: an NCR-mobile termination (NCR-MT), which is an entity that receives side control information from the gNB and performs reporting to the gNB, and an NCR-forwarding (NCR-Fwd) which receives a Tx signal of the gNB and forwards the Tx signal to the UE or receives a Tx of the UE and forwards the Tx signal to the gNB.

In this regard, the following scenarios may be considered.

- The NCR-MT may be defined as a functional entity that enables exchange of control information (e.g., side control information) by communicating with the gNB through a control link (C-link). The C-link is based on an NR Uu interface. For reference, the side control information is at least for control of the NCR-Fwd.
- The NCR-Fwd is defined as a functional entity that amplifies and forwards a UL/DL RF signal between the gNB and the UE through a backhaul link and an access link. The operation of the NCR-Fwd may be controlled based on the side control information received from the gNB.

Hereinbelow, a description will be given based on the C-link and the backhaul link in the above-described scenarios. Specifically, a method for TDM operations of Tx of the NCR on the C-link (UL Tx of the NCR-MT) and Tx of the NCR on the backhaul link (UL Tx of the NCR-Fwd) will be described.

In addition, since cost efficiency is important in the NCR of NR, the NCR assumes an amplify and forward (AF) relay rather than a decode and forward (DF) relay. Therefore, since a signal that the NCR-Fwd receives from the UE and transmits to the gNB is simply amplified and forwarded without performing decoding, there may be a limitation in transmitting a Tx signal of the NCR-MT together on such a Tx resource. For example, in order to multiplex an Rx signal received from the UE and a Tx signal of the NCR-MT, the NCR-Fwd should be previously aware of in which time/frequency domain or on which resource the Rx signal received from the UE exists, and the Rx signal and the Tx signal should also be perfectly synchronized. However, such recognition of the time/frequency resource of the Rx signal and synchronization matching between the Tx signal and the Rx signal may not be possible in the AF relay. Alternatively, it may be difficult to perform UL Tx of the NCR-Fwd and UL Tx of the NCR-MT on the same time resource due to limitation of strength of the Tx signal of the NCR limited according to regulations. In this context, it may be assumed that UL operations of the NCR-Fwd and the NCR-MT are performed through TDM.

In this way, side control information, which is expected to be received by the NCR in relation to UL TDM of the NCR-MT and the NCR-Fwd or is related to UL TDM, or a prior agreement, which is to be defined in relation to the side control information, may be related to an ON/OFF operation of the NCR. Therefore, an ON/OFF rule of the NCR or UL TDM operations of the NCR-MT and the NCR-Fwd according to the side control information will be described in detail later.

Hereinbelow, during operation of the NCR in an NR environment, the side control information, which is indicated for UL TDM operations of the NCR-MT that transmits and receives control information and the NCR-Fwd serving as a relay between the UE and the gNB, and an operation method of the NCR-MT and the NCR-Fwd based on the side control information will be proposed.

### UL TDM operation of NCR

Hereinafter, while the UL operation of the NCR will be described, the UL operation of the NCR may be an operation unrelated to a slot format of the NCR. In addition, a description will be given based on the UL TDM operations of the NCR-MT and the NCR-Fwd. For example, it is assumed that the NCR-Fwd does not perform UL Tx on a time resource on which the NCR-MT performs UL Tx and that the NCR-MT does not perform UL Tx on a time resource on which the NCR-Fwd performs UL Tx. In addition, it is assumed that the ON/OFF operation of the NCR-Fwd is supported by the NCR. Here, the ON operation of the NCR-Fwd means that Tx of the NCR-Fwd has priority over Tx of the NCR-MT. For example, even if UL Tx of the NCR-MT is indicated by the gNB on a time resource for which the NCR-Fwd is set to ON, UL Tx of the NCR-MT may not be performed. The OFF operation of the NCR-Fwd means that Tx of the NCR-MT has priority over Tx of the NCR-Fwd. For example, on a time resource for which the NCR-Fwd is set to OFF, UL Tx of the NCR-MT indicated by the gNB may be performed and UL Tx of the NCR-Fwd may not be performed. Alternatively, the NCR may receive information about a time interval in which the NCR-Fwd is set to ON through the above-described side control information and assume that the NCR-Fwd is indicated as OFF other than the time interval in which the NCR-Fwd is set to ON. Here, the ON operation of the NCR-Fwd means that a forwarding operation through a forwarding link may be performed, and the OFF operation of the NCR-Fwd means that the forwarding operation through the forwarding link is not possible.

### 1. Scenario 1

The NCR-MT may receive an explicit indication of a time interval or a time resource related to the ON/OFF operation of the NCR-Fwd from the gNB (or BS).

For example, the NCR may receive, through RRC and/or operations and management (OAM), a semi-static indication of time resource information about ON/OFF of the NCR-Fwd through side control information. Alternatively, the NCR may receive a dynamic indication of the time resource information through a medium access control-control element (MAC-CE)/downlink control information (DCI). Alternatively, the NCR may receive not only a semi-static indication of the time resource information through RRC and/or OAM but also a dynamic indication of the time resource information through the MAC-CE/DCI. Hereinbelow, Scenario 1 describes in detail a method of determining whether to transmit a signal of the NCR-MT (UL signal) based on the time resource information about ON/OFF of the NCR-Fwd.

In relation to the above-described indication method, the time resource information about ON/OFF of the NCR-Fwd by the gNB or the BS is explained by categorizing the time resource information into Case 1 to Case 4.

Specifically, time resources may be divided into a time resource for which the NCR-Fwd is indicated as ON (Case 1), a time resource for which the NCR-Fwd is indicated as ON but is overridden by a later indication as OFF (Case 2), a time resource for which the NCR-Fwd is indicated as OFF (Case 3), and a time resource for which the NCR-Fwd is indicated as OFF but is overridden by a later indication as ON (Case 4).

Meanwhile, Cases 1 to 4 above may be applied to a method in which UL Tx of the NCR-MT and UL Tx of the NCR-Fwd are configured not to simultaneously occur. Alternatively, Cases 1 to 4 above may be applied to a method for resolving overlap between UL Tx of the NCR-MT and UL Tx of the NCR-Fwd when UL Tx collision between the NCR-MT and the NCR-Fwd occurs (i.e., when the NCR-MT and the NCR-Fwd performs UL Tx on the same time resource or on an overlapping time resource) (although UL Tx of the NCR-MT and UL Tx of the NCR-Fwd are configured not to simultaneously occur or are expected not to simultaneously occur).

(1) Case 1: Time resource for which NCR-Fwd is indicated as ON by gNB

Hereinafter, the operation of the NCR-MT on a time resource for which the NCR-Fwd is indicated as ON by the gNB will be described. Herein, an indication for the NCR-MT by the gNB may mean an explicit indication through signaling such as RRC/MAC-CE/DCI.

1) Alt. 1

The NCR-MT may always determine that UL Tx of the NCR-MT is impossible on a time resource for which the NCR-Fwd is indicated as ON by the gNB. Specifically, in order to guarantee the TDM operations of the NCR-MT and the NCR-Fwd, the NCR-MT may determine that the NCR-MT is incapable of performing UL Tx on a time resource for which the NCR-Fwd is explicitly indicated as ON by the gNB or may assume that a time resource for DL Rx has been configured. This indication method may be related to the operation of the NCR that expects that UL TDM of the NCR-MT and the NCR-Fwd will be perfectly indicated by a scheduler.

Meanwhile, depending on capabilities or requirements of the NCR, a UL Tx switching operation between the NCR-MT and the NCR-Fwd may be considered at a symbol level and a slot level. If the UL Tx switching operation between the NCR-MT and the NCR-Fwd is possible at the symbol level, UL Tx of the NCR-MT is not performed on a symbol resource for which the NCR-Fwd is set to ON. If the UL Tx switching operation between the NCR-MT and the NCR-Fwd is possible at the slot level, UL Tx of the NCR-MT may not be performed on a slot resource including the symbol resource for which the NCR-Fwd is set to ON.

Alternatively, if a time resource for which the NCR-Fwd is indicated as ON by the gNB is at the slot level, the NCR may determine that all UL Tx of the NCR-MT overlapping with a slot corresponding to the indicated time resource is always impossible. Therefore, UL Tx of the NCR-MT may not be performed in the slot corresponding to the indicated time resource. If the time resource for which the NCR-Fwd is indicated as ON by the gNB is at the symbol level, the NCR may determine that all UL Tx of the NCR-MT overlapping with all slots including the symbol corresponding to the indicated time resource is impossible.

2) Alt. 2

Even when the NCR-Fwd is set to or indicated as ON during a time interval, if the time interval is scheduled as a time resource for UL Tx of the NCR-MT, the NCR-MT may assume that the NCR-Fwd is set to OFF during the scheduled time interval.

Specifically, the NCR-MT may perform UL Tx regardless of whether a time interval for ON/OFF of the NCR-Fwd is indicated by the BS. That is, even when the NCR-Fwd is set to ON during a time interval, if the time interval is scheduled as a time resource for UL Tx, the NCR-MT may determine that the NCR-Fwd is indicated as OFF (through control information for scheduling UL Tx of the NCR-MT) during the time interval. In this case, UL Tx of the NCR-Fwd is not performed during the time interval, and UL Tx of the NCR-MT may be performed. This method is intended to prioritize UL Tx of the NCR-MT over UL Tx of the NCR-Fwd in consideration of the fact that UL Tx of the NCR-MT corresponding to an entity transmitting and receiving side control information is relatively important compared to UL Tx of the NCR-Fwd and that the time interval of UL Tx of the NCR-MT is scheduled by the gNB.

Meanwhile, depending on capabilities or requirements of the NCR, a UL Tx switching operation between the NCR-MT and the NCR-Fwd may be considered at a symbol level and a slot level. If the UL Tx switching operation between the NCR-MT and the NCR-Fwd is possible at the symbol level, the NCR-MT may perform UL Tx by determining that the NCR-Fwd is indicated as OFF for an overlapping symbol resource for which the NCR-Fwd is set to ON through UL Tx scheduling of the NCR-MT. If the UL Tx switching operation between the NCR-MT and the NCR-Fwd is possible at the slot level, the NCR-MT may perform UL Tx of the NCR-MT by determining that the NCR-Fwd is indicated as OFF for a slot including the overlapping symbol resource for which the NCR-Fwd is set to ON through UL Tx scheduling of the NCR-MT.

3) Alt. 3

The NCR-MT is incapable of performing UL Tx except for Tx of a specific signal/channel of the NCR-MT on a time resource for which the NCR-Fwd is set to ON. That is, the NCR-MT may perform Tx of the specific signal/channel by determining that the NCR-Fwd is exceptionally set to and/or indicated as OFF (through scheduling information for scheduling the specific signal/channel) for the time resource for which the NCR-Fwd is set to ON.

This method is proposed to solve the problem that Tx of the NCR-Fwd is not continuously performed when UL Tx of the NCR-MT is always prioritized over UL Tx of the NCR-Fwd in Alt. 2. That is, unlike Alt. 2, Alt. 3 is a method of prioritizing only UL Tx of the specific signal/channel of the NCR-MT over UL Tx of the NCR-Fwd.

For example, the NCR-MT may perform UL Tx of the NCR-MT by determining that the NCR-Fwd is set to OFF for Tx of all or part of signals/channels below. That is, the NCR-MT may exceptionally perform UL Tx of all or part of the signals/channels below on an overlapping time resource with a time resource for which the NCR-Fwd is set to ON.

- Signal/channel related to RACH procedure of NCR-MT: For example, an RACH preamble, an RACH MsgA preamble, an Msg3 PUSCH, and an MsgA PUSCH of the NCR-MT may be considered.
- Specific PUSCH of NCR-MT: For example, since a dynamic grant (DG) PUSCH is a PUSCH that the gNB has scheduled relatively recently as DCI, the DG PUSCH may be the specific PUSCH. Alternatively, since a Type 1 and/or Type 2 configured grant (CG) PUSCH is a PUSCH configured to target low latency, the Type 1 and/or Type 2 CG PUSCH may be the specific PUSCH.
- ACK/NACK (A/N) feedback Tx of NCR-MT: A UL signal for UL A/N feedback Tx for all or some PDSCHs
- PUSCH or PUCCH according to UCI payload of NCR-MT: Tx of a PUSCH and/or a PUCCH including a scheduling request (SR)
- Tx of SRS of NCR-MT: Tx of a sounding reference signal (SRS) configured or scheduled for the NCR-MT for the purpose of beam management of the NCR

The NCR may perform only Tx of the NCR-Fwd on a time resource for which the NCR-Fwd is indicated as ON by the gNB for all UL of the NCR-MT except for the above specific signals/channels of the NCR-MT and may drop or cancel Tx of the NCR-MT.

Meanwhile, depending on capabilities or requirements of the NCR, a UL Tx switching operation between the NCR-MT and the NCR-Fwd may be considered at a symbol level and a slot level. If the UL Tx switching operation between the NCR-MT and the NCR-Fwd is possible at the symbol level, the NCR-MT may perform UL Tx of the NCR-MT by determining that the NCR-Fwd is indicated as OFF for an overlapping symbol resource for which the NCR-Fwd is set to ON through UL Tx scheduling of the NCR-MT based on UL of the NCR-MT being the specific signal/channel. If the UL Tx switching operation between the NCR-MT and the NCR-Fwd is possible at the slot level, the NCR-MT may perform UL Tx of the NCR-MT by determining that the NCR-Fwd is indicated as OFF for a slot including the overlapping symbol resource for which the NCR-Fwd is set to ON through UL Tx scheduling of the NCR-MT based on UL of the NCR-MT being the specific signal/channel.

4) Alt. 4

If UL Tx of the NCR-MT is expected or predicted on a time resource for which the NCR-Fwd is set to ON, the NCR may assume that the NCR-Fwd is set to OFF for the time resource on which the NCR-Fwd is set to ON.

Specifically, if the NCR-MT is instructed to perform UL Tx regardless of whether the NCR-MT actually performs UL Tx or if a time resource on which UL Tx of the NCR-MT is expected to be performed overlaps with a time resource for which the NCR-Fwd is set to ON, the NCR may determine that the NCR-Fwd is indicated as OFF for the overlapping time resource. This method is intended to prioritize UL Tx of the NCR-MT over UL Tx of the NCR-Fwd in consideration of the fact that UL Tx of the NCR-MT corresponding to an entity transmitting and receiving the side control information is relatively important compared to UL Tx of the NCR-Fwd and that the time interval of UL Tx of the NCR-MT is scheduled by the gNB.

Meanwhile, in Alt. 2, UL Tx of the NCR-MT is prioritized over UL Tx of the NCR-Fwd only for a signal/channel for which actual UL Tx occurs. However, in Alt. 4, it is assumed that UL Tx of the NCR-Fwd is not prioritized over potential UL Tx of the NCR-MT even for a UL Tx resource for which the NCR-MT is expected to perform Tx even if the NCR-MT does not actually perform Tx.

For example, for a time resource identified through an RACH occasion (RO) on which the NCR-MT configured by the gNB for the NCR may transmit an RACH and through a periodicity and offset configured for a CG PUSCH and/or for a time resource that explicitly allows the NCR-MT to perform UL Tx, the NCR may may not perform UL Tx of the NCR-Fwd by determining that the NCR-Fwd is indicated as OFF even if the NCR-Fwd is set to ON.

Meanwhile, depending on capabilities or requirements of the NCR, a UL Tx switching operation between the NCR-MT and the NCR-Fwd may be considered at a symbol level and a slot level. If the UL Tx switching operation between the NCR-MT and the NCR-Fwd is possible at the symbol level, the NCR-MT may determine that the NCR-Fwd is indicated as OFF for an overlapping symbol for which the NCR-Fwd is set to ON with a time resource for which UL Tx of the NCR-MT is expected. In this case, the NCR-MT may perform UL Tx on the overlapping time resource. If the UL Tx switching operation between the NCR-MT and NCR-Fwd is possible at the slot level, the NCR-MT may perform UL Tx by determining that the NCR-Fwd is indicated as OFF for (all) slots including the overlapping symbol for which the NCR-Fwd is set to ON with the time resource for which UL Tx of the NCR-MT is expected.

## (2) Case 2

Case 2 is related to handling a time resource for which the NCR-MT receives an indication or configuration indicating that the NCR-Fwd has been set to ON from the gNB but for which the NCR-Fwd is later indicated as or set to OFF by the gNB. For example, the time resource may mean a time resource for which the NCR-Fwd has been semi-statically indicated as or set to ON through a signal such as a MAC-CE but is later indicated as OFF through a dynamic signal such as DCI (i.e., a resource for which an indication is overridden). Here, the indication for the NCR-MT received from the gNB means an explicit indication through signaling such as RRC/MAC-CE/DCI. For example, although the NCR-MT receives an indication or configuration indicating that the NCR-Fwd is set to ON for a specific time resource through RRC/OAC from the gNB, the NCR-Fwd is overlappingly indicated as OFF for the time resource for which the NCR-Fwd is indicated as or set to ON by the gNB through a MAC-CE/DCI. Hereinafter, the operation of the NCR-MT in a situation in which the NCR-Fwd is newly indicated as OFF by the gNB for a time resource for which the NCR-Fwd is indicated as ON will be described.

### 1) Alt. 1

The NCR-MT may operate identically for a resource for which the NCR-Fwd is set to OFF, regardless of whether the time resource is overridden. In other words, if the NCR-Fwd is indicated as or set to OFF by the gNB after a first time resource which is a time resource for which the NCR-Fwd is indicated as or set to ON by the gNB, the NCR-MT may consider that the first time resource is a time resource for which the NCR-Fwd is indicated as OFF even if there is an overlapping indication or configuration with the first time resource.
That is, Alt. 1 of Case 2 may perform the same operation as the operation of the NCR-MT in Alt. 1, Alt. 2, and Alt. 3 of Case 3 described below. For example, the operation of the NCR-MT on a time resource for which the NCR-Fwd is set to OFF after being set to ON is the same as the operation of the NCR-MT on a time resource for which the NCR-Fwd is set to OFF. That is, even if the NCR-Fwd is indicated as OFF from ON for a resource, the NCR may expect that the scheduler will notify such an operation (or only an operation for an indication of OFF) according to requirements for the operation.

### 2) Alt. 2

The NCR-MT may operate in consideration of whether a time resource is overridden. For example, a UL Tx operation of the NCR-MT on a time resource for which the NCR-Fwd is set to OFF may be different from a UL Tx operation of the NCR-MT on a time resource for which the NCR-Fwd has been set to ON but is later overridden to OFF.
In other words, the NCR-MT may perform different operations on a time resource for which the NCR-Fwd is set to OFF after being set to ON and on a time resource for which NCR-Fwd is set to OFF. For example, the NCR-MT may consider operations thereof based on one of Alt. 1, Alt. 2, and Alt. 3 of Case 3 described later for a time resource for which the NCR-Fwd is set to OFF after being set to ON and for a time resource for which the NCR-Fwd is set to OFF.
In addition, the operation of the NCR-MT may differ depending on time line requirements of the NCR. Specifically, a time line requirement of the NCR-MT and a time line requirement of the NCR-Fwd may be considered separately or together. The time line requirement of the NCR-MT may be related to a preparation time required for Tx (e.g., Tx time line requirement). For example, an existing time line requirement such as a PUSCH preparation time of the NCR-MT may be applied to a resource for which the NCR-Fwd is set to OFF by the gNB. Alternatively, the time line requirement such as the PUSCH preparation time of the NCR-MT may not be applied to a resource for which the NCR-Fwd has been set to ON by the gNB but is later set back to OFF according to an indication by the gNB. Alternatively, if the time line requirement of the NCR-MT is not satisfied for the resource for which the NCR-Fwd has been set to ON by gNB but is later set to OFF according to the indication by the gNB, the NCR-MT may not perform UL Tx even though the NCR-Fwd is set to OFF. Alternatively, a first time line requirement for a time resource for which NCR-Fwd is set to OFF from the beginning and a second time line requirement for a time resource for which the NCR-Fwd has been set to ON but is later set to OFF according to the indication by the gNB may be different from each other. For example, the first time line requirement may be set to a shorter time than the second time line requirement.
In addition, a UL Tx operation of the NCR-MT may differ depending on a time line requirement for ON/OFF of the NCR-Fwd. For example, a transition time may be required to switch UL TX of the NCR-Fwd from ON to OFF, or a time required for the NCR-Fwd may be required to deactivate RF. The NCR-MT may previously report information about a time line requirement related to such an ON/OFF operation of the NCR-Fwd to the gNB through RRC/MAC-CE/UCI, etc. Therefore, the gNB may expect that UL Tx of the NCR-MT may be performed on a time resource for which the NCR-Fwd is set to OFF. However, the gNB may predict that the NCR-Fwd may not be set to OFF for a reason such as the time line requirement of the NCR-Fwd for a time resource for which the NCR-Fwd is indicated back as OFF after being set to ON or predict that UL Tx of the NCR-MT may not be performed even if the NCR-Fwd is set to OFF.

(3) Case 3

Case 3 relates to a UL Tx operation of the NCR-MT on a time resource for which the NCR-Fwd is indicated as OFF by the gNB.

1) Alt. 1

The NCR-MT may always perform UL Tx on a time resource for which the NCR-Fwd is indicated as or set to OFF by the gNB. That is, in order to guarantee the TDM operations of the NCR-MT and the NCR-Fwd, the NCR-MT may determine that UL Tx of the NCR-MT may always be performed on a time resource for which the NCR-Fwd is explicitly indicated as OFF by the gNB.

Meanwhile, depending on capabilities or requirements of the NCR, a UL Tx switching operation between the NCR-MT and the NCR-Fwd may be considered at a symbol level and a slot level. If the UL Tx switching operation between the NCR-MT and the NCR-Fwd is possible at the symbol level, the NCR-MT may always perform UL Tx of the NCR-MT on an overlapping symbol resource for which the NCR-Fwd is set to OFF through UL Tx scheduling of the NCR-MT. If the UL Tx switching operation between the NCR-MT and the NCR-Fwd is possible at the slot level, the NCR-MT may always perform UL Tx of the NCR-MT for slots including the overlapping symbol resource for which the NCR-Fwd is set to OFF through UL Tx scheduling of the NCR-MT.

2) Alt. 2

Even when the NCR-Fwd is set to OFF for a time resource, the NCR-MT may perform UL Tx only on the time resource only if there is an additional or separate indication.

Specifically, the NCR-MT may receive an indication of a periodicity and/or an offset of a time interval in which Tx is expected to be possible from the gNB at a symbol level or a slot level through RRC/MAC-CE/DCI. It may be considered that UL Tx of the NCR-MT is performed only on a time resource for which the NCR-Fwd is set to OFF in the time interval in which Tx of the NCR-MT is expected to be possible according to such an indication by the gNB. In other words, for UL Tx of the NCR-MT, it may be necessary to indicate a time resource for which the NCR-Fwd is (explicitly) indicated as OFF by the gNB and also a time interval in which UL Tx of the NCR-MT is allowed.

Alternatively, even for a time resource for which the NCR-Fwd is set to OFF, it may be considered that the NCR-MT performs UL Tx only for a specific signal/channel. For example, even if the NCR-Fwd is set to OFF, the NCR-MT may perform UL Tx of the NCR-MT for Tx of all or part of the following signals/channels. In other words, even if there is a time resource for which the NCR-Fwd is set to OFF, the NCR-MT may allow UL Tx only for the specific signals/channels described below.

- Signal/channel related to RACH procedure of NCR-MT: For example, an RACH preamble, an RACH MsgA preamble, an Msg3 PUSCH, and an MsgA PUSCH of the NCR-MT may be considered.
- Specific PUSCH of NCR-MT: For example, since a DG PUSCH is a PUSCH that the gNB has scheduled relatively recently as DCI, the DG PUSCH may be the specific PUSCH. Alternatively, since a Type 1 and/or Type 2 CG PUSCH is a PUSCH configured to target low latency, the Type 1 and/or Type 2 CG PUSCH may be the specific PUSCH.
- A/N feedback Tx of NCR-MT: A UL signal for UL A/N feedback Tx for all or some PDSCHs
- PUSCH or PUCCH according to UCI payload of NCR-MT: Tx of a PUSCH and/or a PUCCH including an SR
- Tx of SRS Tx of NCR-MT: Tx of an SRS configured or scheduled for the NCR-MT for the purpose of beam management of the NCR

3) Alt. 3

Even for a time resource for which the NCR-Fwd is set to or indicated as OFF, if cell-specific UL forwarding is expected to be performed through the NCR-Fwd, the NCR-MT may determine that the NCR-Fwd is set to ON for the time resource. Here, cell-specific UL may be the UL defined in Tables 7 to 17. In other words, even when the NCR-Fwd is set to OFF for a time resource, if UL forwarding of a cell-specific signal by the NCR-Fwd is expected to be performed on the time resource, the NCR-MT may determine that the NCR-Fwd is exceptionally set to ON for the time resource.

In this case, the NCR-MT is incapable of performing UL Tx in a time interval in which the NCR-Fwd is indicated as or set to ON by the gNB or on a time resource for which cell-specific UL forwarding is expected to be required (a resource on which a cell-specifically configured UE is expected to perform or be capable of performing UL Tx). For example, the time resource for which cell-specific UL forwarding is expected to be required may be predicted based on cell-specifically configured ROs and/or time resource information scheduled for cell-specific (or cell common) UL Tx of the UE (see Tables 7 to 17). That is, for time resources on which cell-specifically, cell-commonly, or UE-group-commonly configured UL Tx is expected or predicted to be performed by the UE, the NCR-MT may consider or determine that the NCR-Fwd has been indicated as ON by the gNB. If the expected time resources (time resources on which cell-specifically, cell-commonly, or UE-group-commonly configured UL Tx is expected or predicted by gNB to be performed by the UE) are indicated at a symbol level, the NCR may determine or consider that the NCR-Fwd is indicated as ON by the gNB for all slots including symbols which are the expected time resources.

In other words, the NCR or the NCR MT may predict time/frequency resources on which cell-specific signals for the UE are to be transmitted through system information or RRC configuration information received from the gNB or the BS and may consider that the NCR-Fwd is set to ON for expected resources, which are the predicted time/frequency resources, or expected time resources even if the NCR-Fwd is not separately indicated as ON (or even if the NCR-Fwd is indicated as OFF) by the gNB for the expected resources or the expected time resources.

(4) Case 4.

Case 4 relates to a time resource for which the NCR-Fwd has been indicated as OFF by the gNB but is later overridden to ON according to an indication by the gNB.

1) Alt. 1

The NCR-MT may operate in correspondence to the operation of the NCR-MT for a resource for which the NCR-Fwd is set to ON, regardless of whether the resource is overridden. For example, the NCR-MT may perform an operation corresponding to the operation of the NCR-MT in Alt. 1, Alt. 2, Alt. 3, and Alt. 4 of Case 1 described above. That is, the operation of the NCR-MT for a time resource for which the NCR-Fwd is set to ON after being set to OFF may be the same as the operation for a time resource for which the NCR-Fwd is set to ON.

2) Alt. 2

The NCR-MT may operate differently depending on whether the NCR-Fwd is overridden to ON/OFF. For example, a Tx operation of the NCR-MT on a time resource for which the NCR-Fwd is set to ON may be different from a Tx operation of the NCR-MT on a time resource for which the NCR-Fwd has been set to OFF but is later overridden to ON.

In addition, the operation of the NCR-MT may differ depending on time line requirements of the NCR. Specifically, a time line requirement of the NCR-MT and a time line requirement of the NCR-Fwd may be considered separately or together. The time line requirement of the NCR-MT may be about, i.e., a Tx time line requirement. For example, since UL Tx of the NCR-MT is not expected for a resource for which the NCR-Fwd is set to ON by the gNB, the time line requirement of the NCR-MT is not considered. However, for a resource for which the NCR-Fwd has been set to OFF by the gNB but is later set back to ON according to an indication by the gNB, a time line requirement for cancellation of UL Tx of the NCR-MT may be additionally considered. In this case, if the time line requirement of the NCR-MT is not satisfied, a UL Tx operation of the NCR-MT may be performed without performing UL Tx of the NCR-Fwd even though the NCR-Fwd is set to ON.

In addition, the UL Tx operation of the NCR-MT may differ depending on a time line requirement for ON/OFF of the NCR-Fwd. For example, a transition time may be required to switch from OFF to ON of the NCR-Fwd, or a time may be required to deactivate RF. In this case, the NCR-MT may previously report information about a time line requirement (e.g., information about the transition time) for an ON/OFF operation of the NCR-Fwd to the gNB through RRC/MAC-CE/UCI, etc. The gNB may predict that UL Tx of the NCR-Fwd will not be performed for a time resource for which switch from OFF of the NCR-Fwd to ON of the NCR-Fwd is indicated based on the reported information. Alternatively, the gNB may predict that UL Tx of the NCR-MT, rather than the operation of the NCR-Fwd, will be performed on a time resource for which the NCR-Fwd is indicated as or set to ON from OFF based on the reported information.

## 2. Scenario 2

In Scenario 2, the NCR-MT may not receive an explicit indication of a time interval or a time resource for which the ON/OFF operation of the NCR-Fwd is performed from the gNB.

Since indicating the time resource/time interval related to the ON/OFF operation of the NCR-Fwd every time may cause signaling overhead, the time resource/time interval related to the ON/OFF operation of the NCR-Fwd may be implicitly determined or configured based on a combination of side control information of various types (e.g., beamforming information, TDD configuration, power control information, etc.). Alternatively, the NCR may implicitly determine the time resource/time interval related to the ON/OFF operation of the NCR-Fwd based on the operation of the NCR-MT such as whether the NCR-MT performs Tx. The time resource/time interval related to the ON/OFF operation of the NCR-Fwd may be determined or configured based on a time interval or time resource on which UL Tx of the NCR-MT is performed (or depending on whether or not the NCR-MT performs Tx or operation).

Hereinafter, whether UL Tx of the NCR-MT is performed and whether the NCR-Fwd is set to ON/OFF will be described. The following alternatives may be applied to two cases. First, the following alternatives may be applied in order to ensure that simultaneous UL Tx operations of the NCR-MT and the NCR-Fwd do not occur. Second, the following alternatives may be applied when the simultaneous UL Tx operations of the NCR-MT and the NCR-Fwd are configured not to occur or in order to resolve collision when collision occurs between the UL Tx operations of the NCR-MT and the NCR-Fwd (i.e., when the NCR-MT and the NCR-Fwd attempt to perform UL Tx on the same time resource or on an overlapping time resource).

1) Alt. 1

The NCR may determine that the NCR-Fwd is indicated as OFF for resources on which UL Tx of the NCR-MT is actually performed and that the NCR-Fwd is indicated as ON for the remaining resources (time resources on which UL Tx of the NCR-MT is not actually performed).

Specifically, the NCR may determine that the NCR-Fwd is set to ON for all time resources by default for whether the NCR-Fwd is set to ON/OFF. That is, if the NCR fails to receive a separate indication regarding whether the NCR-Fwd is set to ON/OFF, the NCR may determine that the NCR-Fwd is set to ON for all time resources but determine that the NCR-Fwd is set to OFF (or is indicated as OFF) only for a time interval in which UL Tx of the NCR-MT is performed.

Depending on the configuration of the NCR-MT and the NCR-Fwd, the following options may be considered. The NCR may consider setting the NCR-Fwd to OFF only for symbols in which UL Tx of the NCR-MT is performed. Alternatively, the NCR may determine that the NCR-Fwd is set to OFF for time resources including a time interval for symbols in which UL Tx of the NCR-MT is performed and a time interval for switching an ON/OFF operation of the NCR-Fwd. For example, if UL Tx of the NCR-MT is indicated for the 3rd, 4th, 5th, 6th, and 7th symbols of a specific slot and a transition time of 2 symbols is required for the NCR-Fwd to switch from ON to OFF (and/or a transition time of 1 symbol is required for the NCR-Fwd to switch from OFF to ON), the NCR may determine that the NCR-Fwd is set to OFF for the 1st, 2nd, 3rd, 4th, 5th, 6th, and 7th symbols of the slot (while performing UL Tx of the NCR-MT for the 3rd, 4th, 5th, 6th, and 7th symbols of the slot).

Alternatively, the NCR may determine that the NCR-Fwd is set to OFF for all slots containing symbols in which UL Tx of the NCR-MT is performed. Alternatively, the NCR may determine that the NCR-Fwd is set to OFF for time resources including a time interval for all slots containing symbols in which UL Tx of the NCR-MT is performed and a time interval required for switching the ON/OFF operation of the NCR-Fwd. For example, if UL Tx of the NCR-MT is indicated for the 3rd, 4th, 5th, 6th, and 7th symbols in the i-th slot, a transition time required for switching the NCR-Fwd from ON to OFF is 2 symbols, and a transition time required for switching the NCR-Fwd from OFF to ON is 1 symbol, the NCR-MT may perform UL Tx in the 3rd, 4th, 5th, 6th, and 7th symbols of the i-th slot but the NCR-Fwd may be set to OFF in the last two symbols of the (i-1)-th slot, the entirety of the i-th slot, and the first symbol of the (i+1)-th slot.

2) Alt 2

The NCR may determine that the NCR-Fwd is set to OFF even for time resources on which UL Tx of the NCR-MT will be expected to be performed or UL Tx of the NCR-MT is predicted and that the NCR-Fwd is always set to ON for all of the remaining time resources except for the expected/predicted time resources.

That is, the NCR may determine that the NCR-Fwd is set to ON for all time resources by default for whether the NCR-Fwd is set to ON/OFF. In addition, the NCR may determine that the NCR-Fwd is indicated as OFF even for time resources for which the NCR-MT is indicated to be capable of performing UL Tx or the NCR-MT is expected to perform UL Tx, regardless of whether the NCR-MT actually performs UL Tx. This method is intended to prioritize UL Tx of the NCR-MT over UL Tx of the NCR-Fwd in consideration of the fact that UL Tx of the NCR-MT corresponding to an entity transmitting and receiving the side control information is relatively important compared to UL Tx of the NCR-Fwd and that a time interval of UL Tx of the NCR-MT is scheduled by the gNB. In Alt. 1, UL Tx of the NCR-MT has priority over UL Tx of the NCR-Fwd only for a signal/channel for which UL Tx is actually performed, whereas, in Alt. 2, UL Tx of the NCR-MT even for a time resource on which UL Tx of the NCR-MT is predicted or expected to be performed (i.e., potential UL Tx of the NCR-MT) may be prioritized over UL Tx of the NCR-Fwd.

For example, the NCR may determine or consider that the NCR-Fwd is indicated as OFF for a time resource on which UL Tx of the NCR-MT is expected, such as a time resource configured as an RO, which is an RACH Tx resource of the NCR-MT configured by gNB or a periodicity and an offset configured for a CG PUSCH, and/or a time resource explicitly allowing UL Tx of the NCR-MT.

Alternatively, if a time resource for which the NCR-Fwd is indicated as ON by the gNB is at a slot level, the NCR may determine that the NCR-Fwd is set to OFF for a slot including some symbols that overlap with a time interval in which UL Tx of the NCR-MT may occur among slots of the time resource. Alternatively, if a time resource for which the NCR-Fwd is indicated as ON by the gNB is at a symbol level, the NCR may determine that the NCR-Fwd is set to OFF for symbols that overlap with a time interval in which UL Tx of the NCR-MT may occur or a slot that includes the symbols among symbols indicated as the time resource.

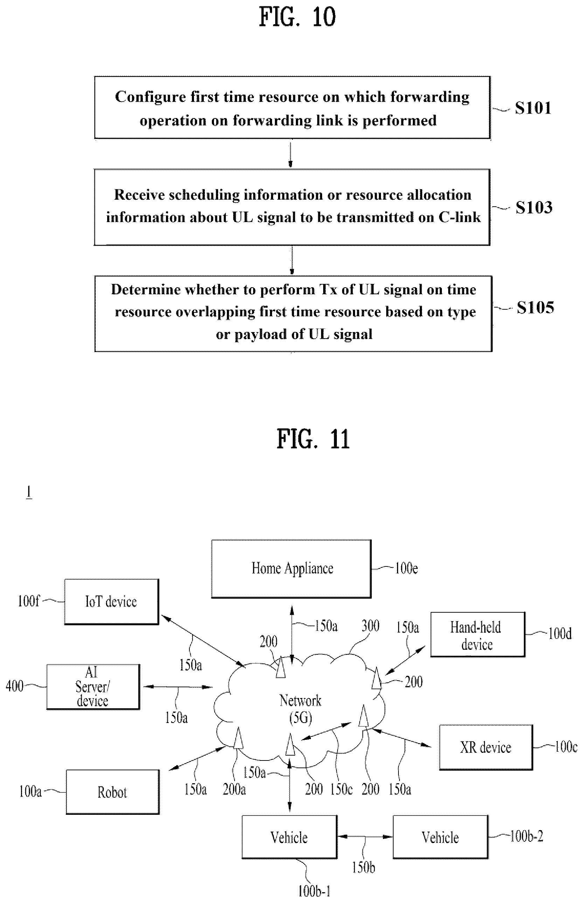

FIG. 10 is a diagram illustrating a method for a device to perform a forwarding operation on a forwarding link and a UL Tx operation on a C-link.

As described above, the device may correspond to an NCR including an NCR-MT that receives control information or transmits a UL signal through a C-link formed with a BS or a gNB, and an NCR-Fwd that relays or amplifies an Rx signal (or, an Rx UL signal) received from a UE and forwards the Rx signal to the BS through a forwarding link. In addition, as described above, the device may perform a forwarding operation on the forwarding link or a Tx operation of the UL signal on the C-link based on TDM. For example, the device may not simultaneously perform the forwarding operation and the Tx operation of the UL signal.

Hereinafter, for convenience of explanation, UL Tx of the NCR-MT is defined as Tx of the UL signal or a Tx operation of the UL signal on the C-link, and ON/OFF of the NCR-Fwd is defined as ON/OFF of the forwarding operation on the forwarding link. Here, ON of the forwarding operation includes not only an operation of actually performing forwarding of a received Rx signal, but also a standby case so that forwarding of the Rx signal is capable of being performed.

Referring to FIG. 10, the device may configure a first time resource on which the forwarding operation on the forwarding link is performed is configured (S101). The first time resource may be configured or determined, as described above, based on side control information about the forwarding link received from the BS through the C-link or separate time resource allocation information about an ON period of the forwarding operation. In addition, as described above, the device may be configured with the first time resource through RRC signaling or may be dynamically configured with the first time resource through DCI or a MAC CE.

Next, the device may receive scheduling information or resource allocation information (or control information including the scheduling information or the resource allocation information) about a UL signal to be transmitted on the C-link (S103). The resource allocation information may include information about a second time resource (or second time resources) for transmitting the UL signal to the BS on the C-link. For example, the device may receive the resource allocation information through DCI, etc. transmitted by the BS.

Meanwhile, the device expects that the first time resource on which the forwarding operation is performed and the second time resource for transmitting the UL signal will be subjected to TDM. However, it is necessary to define which operation should be prioritized in the case in which the first time resource and the second time resource partially or fully overlap.

As described above (in particular, Alt 3 in Case 1 of Scenario 1), the device may determine whether to perform Tx of the UL signal on the second time resource overlapping the first time resource based on the type of the UL signal scheduled by the resource allocation information or on a payload included in the UL signal (S105).

For example, if the UL signal includes a specific type or specific payload of the UL signal, the device may drop or cancel Tx of the UL signal by prioritizing the forwarding operation. Alternatively, if the UL signal is not the specific type of the UL signal or (and/or) does not contain the specific payload, the device may drop or cancel Tx of the UL signal by prioritizing the forwarding operation.

Here, the specific type of the UL signal may be (or may be preset to) at least one of a UL signal related to performing an RACH procedure (MsgA (a MsgA PRACH or a PUSCH), Msg1, or Msg3), a UL signal scheduled based on a DG (e.g., a DG PUSCH), a UL signal scheduled based on a CG (e.g., a CG PUSCH), or a configured SRS of the NCR-MT for beam management purposes. In addition, the specific payload may be UCI including an SR or CSI information or may be A/N feedback information for a received PDSCH.

For example, if the UL signal to be transmitted on the C-link includes UCI, the device may transmit the UL signal with priority over the forwarding operation even on the second time resource overlapping with the first time resource. That is, the device may determine or assume that the forwarding operation for the first time resource overlapping with the second time resource is indicated as or set to OFF through the control information including the resource allocation information for scheduling the UL signal including the UCI. In this case, the device may perform Tx of the UL signal with priority without performing the forwarding operation on the second time resource. In contrast, if the UL signal to be transmitted on the C-link does not include the UCI, the device may perform the forwarding operation with priority and drop or cancel the Tx of the UL signal. Here, the performance of the forwarding operation includes not only the operation of actually performing forwarding of a received Rx signal, but also a standby state for forwarding of the Rx signal. That is, if the UL signal to be transmitted on the C-link does not include the UCI, the device may maintain an ON state of the NCR-Fwd associated with the forwarding link so as to enable forwarding on the forwarding link without performing Tx of the UL signal.

Alternatively, if the UL signal to be transmitted on the C-link is a MsgA PRACH, a MsgA PUSCH, a DG PUSCH, a CG PUSCH, a PUCCH or an SRS, the device may transmit the UL signal with priority over the forwarding operation even on the second time resource overlapping with the first time resource. That is, the device may set the NCR-Fwd (or wireless unit) related to the forwarding operation to OFF and perform Tx of the UL signal. In contrast, if the UL signal to be transmitted on the C-link is not a UL signal of the type of the MsgA PRACH, the MsgA PUSCH, the DG PUSCH, the CG PUSCH, the PUCCH or the SRS, the device may cancel or drop Tx of the UL signal and maintain the NCR-Fwd in an ON state.

In this way, the device performs the forwarding operation with priority over the Tx operation of the UL signal in a time interval configured or indicated by the BS but may exceptionally prioritize the Tx operation of the UL signal over the forwarding operation for Tx of a specific UL signal or a UL signal including a specific payload. In this case, while the forwarding operation in a time interval predictable by the BS is guaranteed, deterioration in service requirements and service quality caused by Tx delay of the UL signal is minimized by exceptionally allowing Tx of the specific UL signal in a time interval overlapping with the above time interval.

**Communication system example to which the present disclosure is applied**

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

FIG. 11 illustrates a communication system applied to the present disclosure.

Referring to FIG. 11, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices to which the present disclosure is applied

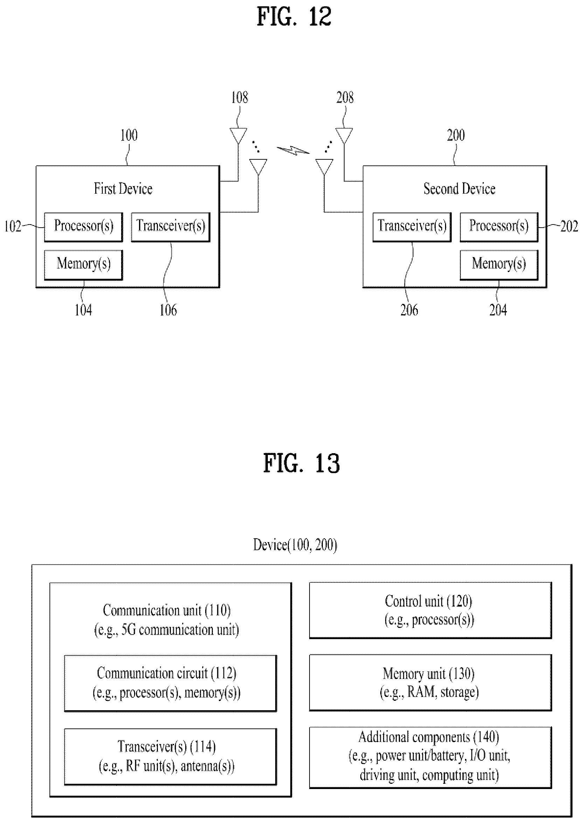

FIG. 12 illustrates a wireless device applicable to the present disclosure.

Referring to FIG. 12, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to one example, the first wireless device 100 or the device may include the processor(s) 102 connected to the RF transceiver(s) 106 and include the memory(s) 104. The memory(s) 104 may include at least one program capable of performing operations related to the embodiments described with reference to FIGS. 9 and 10.

Specifically, the processor(s) may report capability information related to beam configuration of a backhaul link to the BS through a control link, configures, through the control link, a first time resource on which a forwarding operation on the forwarding link is performed, receives resource allocation information about a second time resource on which transmission of an uplink signal on the control link is performed, and determines whether to perform transmission of the uplink signal with priority over the forwarding operation on the second time resource overlapping with the first time resource based on a type or payload of the uplink signal.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of application of wireless devices to which the present disclosure is applied

FIG. 13 illustrates another example of a wireless device applied to the present disclosure.

Referring to FIG. 13, wireless devices 100 and 200 may correspond to the wireless devices 100 and 200 of FIG. 12 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 12. For example, the transceiver(s) 114 may include the one or more transceivers 106 and 206 and/or the one or more antennas 108 and 208 of FIG. 12. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 11), the vehicles (100b-1 and 100b-2 of FIG. 11), the XR device (100c of FIG. 11), the hand-held device (100d of FIG. 11), the home appliance (100e of FIG. 11), the IoT device (100f of FIG. 11), a digital broadcast terminal, a hologram device, a public safety device, an MTC device, a medicine device, a fintech device (or a finance device), a security device, a climate/environment device, the AI server/device (400 of FIG. 11), the BSs (200 of FIG. 11), a network node, etc. The wireless device may be used in a mobile or fixed place according to a use-example/service.

In FIG. 13, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. In another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

**Industrial Applicability**

The embodiments of the present disclosure described above are applicable to various mobile communication systems.

**Claims**

1. A method for performing communication by a device in which a forwarding link for forwarding a signal received from a base station and a control link and a terminal is formed in a wireless communication system, the method comprising:

   configuring a first time resource for performing a forwarding operation for the forwarding link through the control link;
   receiving resource allocation information for a second time resource for performing transmission of an uplink signal for the control link; and
   determining whether to perform transmission of the uplink signal with priority over the forwarding operation in the second time resource overlapping with the first time resource based on a type or payload of the uplink signal.

2. The method according to claim 1, wherein, based on the uplink signal including UCI (Uplink Control Information), the transmission of the uplink signal is performed with priority over the forwarding operation.

3. The method according to claim 2, wherein the device determines, based on the uplink signal including the UCI, that the forwarding operation on the first time resource overlapping with the second time resource is set to OFF based on the resource allocation information.

4. The method according to claim 2, wherein, based on the uplink signal not including the UCI, the transmission of the uplink signal is dropped.

5. The method according to claim 1, wherein, based on the uplink signal being a DG PUSCH (dynamic grant physical uplink shared channel), the transmission of the uplink signal is performed with priority over the forwarding operation.

6. The method according to claim 1, wherein, based on the uplink signal being a CG PUSCH (configured grant physical uplink shared channel) of type 1 or type 2, the transmission of the uplink signal is performed with priority over the forwarding operation.

7. The method according to claim 1, wherein, based on the uplink signal being an uplink signal for a RACH (Random Access Channel) procedure, the transmission of the uplink signal is performed with priority over the forwarding operation.

8. The method according to claim 1, wherein the first time resource is configured through side control information for controlling the forwarding link.

9. The method according to claim 1, wherein the transmission operation of the uplink signal in the control link is not performed in a time resource in which the forwarding operation in the forwarding link is performed.

10. The method according to claim 1, wherein the device is a NCR (Network Controlled Repeaters).

11. A non-transitory computer-readable medium recording a program code for performing the method according to claim 1.

12. A device for forming a control link connected to a base station and a forwarding link for forwarding a signal received from a user equipment (UE) in a wireless communication system, the device comprising:

    a radio frequency (RF) transceiver; and
    a processor connected to the RF transceiver,
    wherein the processor is configured to:

       configure a first time resource for performing a forwarding operation for the forwarding link through the control link;
receive resource allocation information for a second time resource for performing transmission of an uplink signal for the control link; and
determine whether to perform transmission of the uplink signal with priority over the forwarding operation in the second time resource overlapping with the first time resource based on a type or payload of the uplink signal.

13. The device according to claim 12, wherein, based on the uplink signal including UCI (Uplink Control Information), the transmission of the uplink signal is performed with priority over the forwarding operation.

14. The device of claim 12, wherein the device determines, based on the uplink signal including the UCI, that the forwarding operation on the first time resource overlapping with the second time resource is set to OFF based on the resource allocation information.

15. A chipset for controlling a device in which a control link connected to a base station and a forwarding link for forwarding a signal received from a terminal are formed in a wireless communication system, the chipset comprising:

at least one processor; and
at least one memory operatively connected to the at least one processor and configured to, when executed, cause the at least one processor to perform operations,
wherein the operation comprises:

configuring a first time resource for performing a forwarding operation for the forwarding link through the control link;
receiving resource allocation information for a second time resource for performing transmission of an uplink signal for the control link; and
determining whether to perform transmission of the uplink signal with priority over the forwarding operation in the second time resource overlapping with the first time resource based on a type or payload of the uplink signal.

# FIG. 1

# FIG. 2

AMF / UPF

AMF / UPF

50

50

NGC

NG - C/U    NG - C/U

NG - C/U    NG - C/U

40

40

40

gNB

Xn

gNB

NG - RAN

Xn

Xn

gNB

10

UE

# FIG. 3

| ··· | One Frame (10ms) | ··· |

| ··· | Half-Frame (5ms) | Half-Frame (5ms) | ··· |

| ··· | Subframe 0 (1ms) | ··· | Subframe 4 (1ms) | Subframe 5 (1ms) | ··· | Subframe 9 (1ms) | ··· |

Subframe (1ms)

15KHz — Slot 0 (14symbols) — 1ms

30KHz — Slot 0 (14symbols) | Slot 1 — 500us

60KHz — Slot 0 (14symbols) | Slot 1 | Slot 2 | Slot 3 — 250us

120KHz — Slot 0 (14symbols) | Slot 1 | Slot 2 | Slot 3 | Slot 4 | Slot 5 | Slot 6 | Slot 7 — 125us

# FIG. 4

# FIG. 5

| | | Long PUSCH | | |
|---|---|---|---|---|
| PDCCH | Gap | PDSCH/PUSCH | | Short PUCCH |
| | | | Long PUCCH | |

One slot

f
t

# FIG. 6

```
UE                                          BS

        CORESET configuration
  ◄─────────────────────────────────         S502

          SS configuration
  ◄─────────────────────────────────         S504

                              ┌──────────────────┐
                              │ PDCCH generation │     S506
                              └──────────────────┘

┌──────────────────┐
│ PDCCH candidate  │
│ monitoring in the│     S508
│  configured SS   │
└──────────────────┘
```

## FIG. 7

Parent node    DU

Parent link

IAB node    MT / DU

Child link

Child node    MT / DU

## FIG. 8

Network-controlled repeater(NCR)

Control link

NCR-MT(Mobile terminal)

Internal interface

Forwarding link for backhaul(FLB)

NCR-RU(Radio Unit)

Forwarding link for sevice(FLS)

gNB

UE

# FIG. 9

(a)

(b)

# FIG. 10

Configure first time resource on which forwarding operation on forwarding link is performed ~ S101

Receive scheduling information or resource allocation information about UL signal to be transmitted on C-link ~ S103

Determine whether to perform Tx of UL signal on time resource overlapping first time resource based on type or payload of UL signal ~ S105

# FIG. 11

1

Home Appliance —100e

100f — IoT device

~150a    300    150a

200

Hand-held device —100d

150a

400 — AI Server/device

~200

150a

Network (5G)

XR device —100c

100a — Robot

150a

150a    200a

150c~

200 150c 200 150a

Vehicle

Vehicle —100b-2

150b

100b-1

# FIG. 12

# FIG. 13

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# INTERNATIONAL SEARCH REPORT

| International application No. |
| --- |
| **PCT/KR2023/011195** |

| A. | CLASSIFICATION OF SUBJECT MATTER |
| --- | --- |

**H04L 5/14**(2006.01)i; **H04L 5/00**(2006.01)i; **H04W 88/04**(2009.01)i; **H04W 4/40**(2018.01)i; **H04W 72/23**(2023.01)i

According to International Patent Classification (IPC) or to both national classification and IPC

| B. | FIELDS SEARCHED |
| --- | --- |

Minimum documentation searched (classification system followed by classification symbols)

H04L 5/14(2006.01); H04W 72/04(2009.01); H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NCR(network controlled repeaters), 제어 링크(control link), 포워딩 링크 (forwarding link), 업링크 신호(uplink signal), 시간 자원(time resource), 자원 할당(resource allocation), 중첩(overlap), UCI(uplink control information)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | ZTE. Discussion on side control information to enable NR network-controlled repeaters. R1-2203237, 3GPP TSG RAN WG1 #109-e. 29 April 2022.<br>See sections 2, 3.2, 3.3.2, 3.4.1 and 3.4.3; and figures 1 and 4. | 1-15 |
| Y | KR 10-2022-0046567 A (QUALCOMM INCORPORATED) 14 April 2022 (2022-04-14)<br>See paragraphs [0084], [0096]-[0098] and [0102]; and claims 1-3. | 1-15 |
| Y | WO 2022-082638 A1 (APPLE INC.) 28 April 2022 (2022-04-28)<br>See claims 1-2. | 5 |
| A | KR 10-2021-0052579 A (SAMSUNG ELECTRONICS CO., LTD.) 10 May 2021 (2021-05-10)<br>See claims 1-7. | 1-15 |
| A | MODERATOR (FUJITSU). Summary#3 on L1/L2 signaling for side control information. R1-2205519, 3GPP TSG RAN WG1 Meeting #109-e. 20 May 2022.<br>See pages 28 and 36. | 1-15 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **07 November 2023** | **07 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/011195**

| Patent document cited in search report | | | Publication date (day/month/year) | Patent family member(s) | | | Publication date (day/month/year) |
|---|---|---|---|---|---|---|---|
| KR | 10-2022-0046567 | A | 14 April 2022 | BR | 112022002024 | A2 | 29 March 2022 |
| | | | | CN | 114270745 | A | 01 April 2022 |
| | | | | EP | 4014378 | A1 | 22 June 2022 |
| | | | | JP | 2022-544204 | A | 17 October 2022 |
| | | | | US | 2021-0051702 | A1 | 18 February 2021 |
| | | | | WO | 2021-029956 | A1 | 18 February 2021 |
| WO | 2022-082638 | A1 | 28 April 2022 | CN | 116569639 | A | 08 August 2023 |
| | | | | EP | 4229979 | A1 | 23 August 2023 |
| | | | | KR | 10-2023-0091939 | A | 23 June 2023 |
| | | | | US | 2022-0312436 | A1 | 29 September 2022 |
| KR | 10-2021-0052579 | A | 10 May 2021 | CN | 110958707 | A | 03 April 2020 |
| | | | | CN | 110958707 | B | 18 July 2023 |
| | | | | EP | 3857805 | A1 | 04 August 2021 |
| | | | | EP | 3857805 | B1 | 30 August 2023 |
| | | | | US | 2021-0337569 | A1 | 28 October 2021 |
| | | | | WO | 2020-067801 | A1 | 02 April 2020 |

Form PCT/ISA/210 (patent family annex) (July 2022)